(19) Europäisches Patentamt
European Patent Office
Office européen des brevets

(11) EP 1 462 172 A1

(12) EUROPEAN PATENT APPLICATION
published in accordance with Art. 158(3) EPC

(43) Date of publication:
29.09.2004 Bulletin 2004/40

(51) Int Cl.7: B01J 47/12, C02F 1/46, C08J 5/20

(21) Application number: 02793461.1

(22) Date of filing: 27.12.2002

(86) International application number:
PCT/JP2002/013856

(87) International publication number:
WO 2003/055604 (10.07.2003 Gazette 2003/28)

(84) Designated Contracting States:
AT BE BG CH CY CZ DE DK EE ES FI FR GB GR IE IT LI LU MC NL PT SE SI SK TR
Designated Extension States:
AL LT LV MK RO

(30) Priority: 27.12.2001 JP 2001396540
28.12.2001 JP 2001400066
28.12.2001 JP 2001400076

(71) Applicant: EBARA CORPORATION
Ohta-ku, Tokyo 144-8510 (JP)

(72) Inventors:
• TAKAHASHI, Yohei
Kawasaki-shi, Kanagawa 211-0022 (JP)

• FUJIWARA, Kunio
Yokohama-shi, Kanagawa 244-0001 (JP)
• KAWAMOTO, Takayoshi
Chigasaki-shi, Kanagawa 253-0021 (JP)
• NAKANISHI, Syu
Atami-shi, Shizuoka 413-0003 (JP)
• AKIYAMA, Toru
Yokohama-shi, Kanagawa 225-0003 (JP)

(74) Representative: Wagner & Geyer
Gewürzmühlstrasse 5
D-80538 München (DE)

(54) ELECTRIC DEMINERALIZATION APPARATUS

(57) The present invention provides ion exchangers for an electrical deionization apparatus that can be operated at low voltages by preventing voltage buildup in the electrical deionization apparatus, and an electrical deionization apparatus incorporating said ion exchangers. The present invention provides an ion exchanger for an electrical deionization apparatus, which is to be used as an ion exchanger placed in at least one of a deionization compartment and/or concentration compartment and, which at least partially has a plurality of different functional groups, or which has a graft chain having an ion exchange group on the backbone of an organic polymer substrate and further has a second graft chain on said graft chain, or which has a crosslinked graft chain having an ion exchange group on the backbone of an organic polymer substrate.

FIG. 4(a)

Water splitting

FIG. 4(b)

After prolonged operation

**Description**

TECHNICAL FIELD

The present invention relates so-called an electrical deionization apparatus and ion exchangers for an electrical deionization apparatus. Particularly, it relates to ion exchangers for an electrical deionization apparatus by which water splitting can be continued, more specifically ion exchangers for an electrical deionization apparatus most suitable as ion-exchange nonwoven fabrics and ion-conducting spacers for an electrical deionization apparatus as well as an electrical deionization apparatus that can be operated at low voltages by preventing voltage buildup in the electrical deionization apparatus.

BACKGROUND ART

Electrical deionization apparatus comprises cation exchange membranes and anion exchange membranes arranged between anode and cathode to alternately form concentration compartment(s) and deionization compartment (s) so that ionic components in liquid are removed by transporting/separating ions in an influent in the deionization compartment through the ion exchange membranes into the concentration compartment under a potential gradient as a driving force.

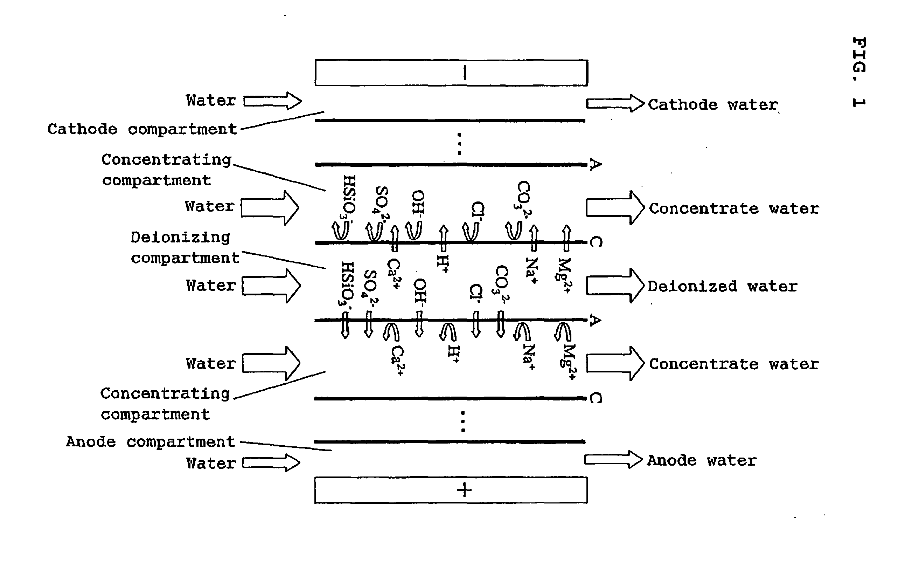

FIG. 1 shows the basic concept of a typical electrical deionization apparatus. In the electrical deionization apparatus shown in FIG. 1, anion exchange membranes A and cation exchange membranes C are alternately arranged between a cathode (-) and an anode (+) to form deionization compartment and concentration compartment. A plurality of deionization compartments are formed in parallel by repeating this alternate sequence of anion exchange membranes and cation exchange membranes. Ion exchangers are packed in the deionization compartments and concentration compartments as appropriate to promote ion migration in the compartments. The compartments bordering the anode and cathode at both ends are commonly called anode compartment and cathode compartment. These electrode compartments may be the concentration compartment bordering each electrode or independently formed by further inserting an ion exchange membrane between the bordering concentration compartment and the electrode. In the former case, the ion exchange membrane bordering the cathode is a cation exchange membrane and the ion exchange membrane bordering the anode is an anion exchange membrane, while in the latter case, the ion exchange membrane bordering the cathode is an anion exchange membrane and the ion exchange membrane bordering the anode is a cation exchange membrane. The electrode compartments here have the function of donating/accepting electrons of the current applied from a DC source. During the operation of such an electrical deionization apparatus, a voltage is applied to the anode and cathode, and water is supplied to the deionization and concentration compartments and both electrode compartments. The water supplied to the concentration compartments is called concentrate water, and the water supplied to the deionization compartments is called influent. When an influent and a concentrate water are introduced into the deionization compartments and concentration compartments respectively, cations and anions in the water are attracted toward the cathode and anode, but the ion exchange membranes allow only ions having the same charge to selectively permeate so that cations in the influent ($Ca^{2+}$, $Na^+$, $Mg^{2+}$, $H^+$, etc.) migrate through the cation exchange membranes C to the concentration compartments on the cathode side and anions ($Cl^-$, $SO_4^{2-}$, $HSiO_3^-$, $CO_3^{2-}$, $HCO_3^-$, $OH^-$, etc.) migrate through the anion exchange membranes A to the concentration compartments on the anode side. On the other hand, migration of anions and cations from the concentration compartments to the deionization compartments is prevented by the impermeability of the ion exchange membranes to ions having different charge. As a result, deionized water with decreased ion levels is obtained in the deionization compartments while concentrate water with increased ion levels is obtained in the concentration compartments.

When such an electrical deionization apparatus is supplied with water at low impurity levels equivalent to e. g. RO (reverse osmosis) treated water as an influent, deionized water with higher purity is obtained. Recently, more highly ultrapure water such as ultrapure water for semiconductor manufacturing has been demanded. A solution to this is to pack the deionization and/or concentration compartments with a mixture of cation-exchange resin beads and anion-exchange resin beads as ion exchangers to promote ion migration in these compartments in an electrical deionization apparatus. Other approaches have also been proposed such as oppositely placing a cation-exchange fibrous material (such as nonwoven fabric) and an anion-exchange fibrous material as ion exchangers on the cation exchange membrane side and the anion exchange membrane side, respectively in the deionization and/or concentration compartments or inserting spacers or ion-conducting spacers having ionic conductivity between these ion-exchange fibrous materials (see PCT/JP 99/01391, International Publication WO99/48820).

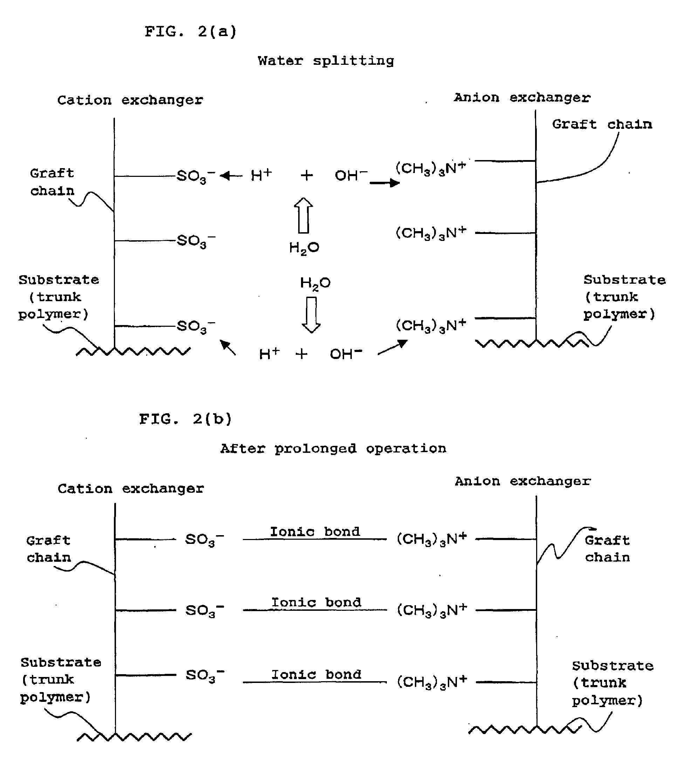

In this type of electrical deionization apparatus, a zone exists where cation exchange groups and anion exchange groups come into contact with each other in the deionization and/or concentration compartments packed with the ion exchangers. Especially in the deionization compartments; water splits ($H_2O \rightarrow H^+ + OH^-$) as shown in FIG. 2 (a) and the ion exchangers in the deionization compartments are continuously and efficiently regenerated by $H^+$ ions

EP 1 462 172 A1

and OH⁻ions generated by this water splitting (water molecule splitting), whereby ultrapure water with high purity can be obtained. This may be explained as follows. Ion migration toward both electrodes is promoted by the presence of a cation exchanger-packed layer and an anion exchanger-packed layer continuously formed by placing spacers or ion-conducting spacers between the cation-exchange fibrous material and the anion-exchange fibrous material in the deionization and/or concentration compartments, which results in a local lack of counterions for functional groups at the interface between the cation exchanger and the anion exchanger, whereby water splits to compensate for the lack of counterions so that $H^+$ ions and $OH^-$ ions are supplied to cation exchange groups and anion exchange groups; and a strong electric field is generated between cation exchange groups and anion exchange groups in proximity to each other at a distance of several angstroms to several tens of angstroms so that water is readily polarized and split to regenerate the ion exchangers while no recombination occurs. It is anticipated that not only water but also non-electrolytes such as alcohols can be polarized and split by the strong electric field and deionized by adsorption of the resulting anions and cations to functional groups.

However, even electrical deionization apparatus of this structure had the disadvantage that the operating voltage increased after prolonged operation. That is, once cation exchange groups and anion exchange groups attract each other to form ionic bonds under the electric field generated in the water splitting zone, i.e. the interface between cation exchange groups and anion exchange groups, as shown in FIG. 2 (b), free ion exchange groups binding to $H^+$ ions and OH- ions decrease and the electric field at the interface is weakened. This results in a lack of the energy for splitting water, thereby hindering water splitting between cation exchange groups and anion exchange groups to deteriorate the regenerating ability of the ion exchangers. To maintain the regenerating ability of the ion exchangers, more electric energy must be externally supplied to give a strong electric field, which may invite an increase in the operating voltage.

Accordingly, an object of the present invention is to provide an electrical deionization apparatus that can be kept at a low operating voltage without inhibiting water splitting at the interface between cation exchange groups and anion exchange groups in the deionization compartment and/or concentration compartment even when the electrical deionization apparatus is operated for a long period.

Another object of the present invention is to provide a novel ion exchanger capable of decreasing bonds between anion exchange groups and cation exchange groups at the interface between cation exchange groups and anion exchange groups in the deionization compartment and/or concentration compartment and also provide an electrical deionization apparatus using said ion exchanger.

DISCLOSURE OF THE INVENTION

As a means to solve the problems described above, a first aspect of the present invention is characterized in that at least a part of the ion exchanger placed in the deionization compartment and/or concentration compartment has a plurality of different functional groups at the interface between anion exchange groups and cation exchange groups.

A second aspect of the present invention is characterized in that the ion exchanger placed in the deionization compartment and/or concentration compartment has a two-stage graft chain at least partially at the interface between anion exchange groups and cation exchange groups.

A third aspect of the present invention is characterized in that the ion exchanger placed in the deionization compartment and/or concentration compartment has a crosslinked graft chain having an ion exchange group at least partially at the interface between anion exchange groups and cation exchange groups.

BRIEF EXPLANATION OF THE DRAWINGS

FIG. 1 is a schematic view of an electrical deionization apparatus.
FIG. 2 (a) is a schematic view showing the mechanism of water splitting at the interface between cation exchange groups and anion exchange groups. FIG. 2 (b) is a schematic view showing the mechanism of the inhibition of water splitting at the interface between cation exchange groups and anion exchange groups in an electrical deionization apparatus after prolonged operation.
FIG. 3 is a schematic view of an electrical deionization apparatus according to a preferred embodiment of the first aspect of the present invention.
FIG. 4 (a) is an enlarged schematic view showing the interface between anion exchange groups and cation exchange groups in ion exchangers having a plurality of functional groups according to the first aspect of the present invention. FIG. 4 (b) is a schematic view showing the mechanism of water splitting at the interface between cation exchange groups and anion exchange groups in the ion exchangers according to the first aspect of the present invention in an electrical deionization apparatus after prolonged operation.

FIG. 5 is a schematic view of an electrical deionization apparatus according to another preferred embodiment of the first aspect of the present invention.

FIG. 6 is a schematic view of the electrical deionization apparatus used in Example 1.

FIG. 7 is a schematic view showing a process for preparing an ion exchanger having a two-stage graft structure according to the second aspect of the present invention.

FIG. 8 shows the principle on which ionic bond formation between ion exchange groups is hindered by ion exchangers having a two-stage graft structure according to the second aspect of the present invention.

FIG. 9 is a schematic view of an electrical deionization apparatus according to a preferred embodiment of the second aspect of the present invention.

FIG. 10 is a schematic view showing the mechanism of water splitting at the interface between cation exchange groups and anion exchange groups when ion exchangers having a crosslinked graft structure according to the third aspect of the present invention are used.

FIG. 11 is a schematic view of an electrical deionization apparatus according to a preferred embodiment of the third aspect of the present invention.

## THE MOST PREFERRED EMBODIMENTS OF THE INVENTION

A first aspect of the present invention is characterized in that at least a part of the ion exchanger placed in the deionization compartment and/or concentration compartment has a plurality of different functional groups at the interface between anion exchange groups and cation exchange groups.

Accordingly, the first aspect of the present invention provides an electrical deionization apparatus comprising cation exchange membranes and anion exchange membranes at least partially alternately arranged between an anode and a cathode to form deionization compartment and concentration compartment and further comprising an ion exchanger at least in said deionization compartment and/or concentration compartment, characterized in that at least a part of said ion exchanger has a plurality of different functional groups at the interface with an oppositely charged ion exchanger and/or ion exchange membrane. In the first aspect of the present invention, said ion exchanger is preferably placed at least in the deionization compartment.

In the first aspect of the present invention, the "ion exchanger" may be in any form or size so far as it has at least one ion exchange group and means to include e.g. ion-exchange resin beads and fibers or woven or nonwoven fabrics having at least one ion exchange group such as ion exchange fibers, ion-exchange nonwoven fabrics, ion-exchange woven fabrics, ion-conducting nets, ion-conducting diagonal nets and ion exchange membranes.

The electrical deionization apparatus can be operated for a long period because water splits at the interface between cation exchange groups and anion exchange groups in the boundary where an ion exchanger placed in the deionization compartment and/or concentration compartment adjoins an oppositely charged ion exchanger or ion exchange membrane so that the cation exchanger and the anion exchanger are regenerated by $H^+$ and $OH^-$ generated by this water splitting. To produce this water splitting, at least one of the cation exchanger and anion exchanger placed in the deionization compartment and/or concentration compartment is preferably a strongly acidic cation exchanger or strongly basic anion exchanger. Especially, combinations of a strongly acidic cation exchanger and a strongly basic anion exchanger are preferably used. This is because water splits better at the interface between the cation exchanger and anion exchanger under the strong electric field generated between strongly acidic cation exchange groups and strongly basic anion exchange groups. If a combination of a strongly acidic cation exchange group and a strongly basic anion exchange group is used alone, however, the cation exchange group and anion exchange group strongly attract each other to form an ionic bond between the cation exchange group and anion exchange group under the strong electric field generated by the cation exchange group and anion exchange group at the interface between them as schematically shown in FIG. 2 (b) and also shown by the chemical reaction formula below, and after prolonged operation, the cation exchange group and anion exchange group are neutralized and the electric field disappears at the interface to impede the splitting into $H^+$ ions and $OH^-$ ions.

$$R_a\text{-}SO_3H + R_b\text{-}N(CH_3)_3OH \rightarrow R_a\text{-}SO_3^-(CH_3)_3{}^+N\text{-}R_b + H_2O$$

In the first aspect of the present invention, the ion exchanger has a plurality of different functional groups in the water splitting zone, i.e. the interface between cation exchange groups and anion exchange groups, thereby inhibiting the neutralization reaction of the formula above to prevent buildup of the voltage required for water splitting and therefore prevent buildup of the operating voltage of the electrical deionization apparatus. As used herein, the water splitting zone or the interface between cation exchange groups and anion exchange groups means to include the interface between a cation exchange resin and an anion exchange resin and the interface between an ion exchange resin and an oppositely charged ion exchange membrane such as the interface between a cation exchange resin and an anion exchange membrane when the ion exchange resins are packed in the deionization compartment and/or concentration compartment. When a cation-exchange fibrous material and an anion-exchange fibrous material are oppositely placed on the cation exchange membrane side and the anion exchange membrane side, respectively in the deionization compartment, it means to include the interface between the cation-exchange fibrous material and the anion-exchange fibrous material. When an ion-conducting spacer having ionic conductivity is inserted between a cation-exchange fibrous material placed on the cation exchange membrane side and an anion-exchange fibrous material placed on the anion exchange membrane side in the deionization compartment, it means to include the interface between each ion-exchange fibrous material and an oppositely charged ion-conducting spacer, i.e. the interface between the cation-exchange fibrous material and an anion-conducting spacer or the interface between the anion-exchange fibrous material and a cation-conducting spacer. When an anion-conducting spacer and a cation-conducting spacer are inserted between both ion-exchange fibrous materials, it also means to include the interface between the anion-conducting spacer and the cation-conducting spacer.

Any commercially available conventional ion exchange membrane can be used without limitation as ion exchange membranes forming the electrical deionization apparatus, including cation exchange membranes such as NEOSEPTA CMX (Tokuyama Corp.) and anion exchange membranes such as NEOSEPTA AMX (Tokuyama Corp.).

In the electrical deionization apparatus according to the first aspect of the present invention, the ion exchanger placed in the deionization compartment and/or concentration compartment can be e.g. ion-exchange resin beads. Ion-exchange resin beads that can be used for this purpose include those prepared by using polystyrene beads crosslinked with divinylbenzene known in the art as a resin beads. For example, a strongly acidic cation exchange resin having a sulfone group is prepared by treating the polystyrene beads as described above with a sulfonating agent such as sulfuric acid or chlorosulfonic acid to introduce a sulfone group into the resin beads, whereby the strongly acidic cation exchange resin is obtained. A strongly basic anion exchange resin having a quaternary ammonium group is prepared by chloromethylating a resin beads and then reacting it with a tertiary amine such as trimethylamine to functionalize it with a quaternary ammonium group, whereby the strongly basic anion exchange resin is obtained. Such preparation processes are known in the art, and ion-exchange resin beads prepared by these processes are commercially available, including cation exchange resins such as Dowex MONOSPHERE 650C (Dow Chemical) and Amberlite IR-120B (Rohm & Haas) and anion exchange resins such as Dowex MONOSPHERE 550A (Dow Chemical) and Amberlite IRA-400 (Rohm & Haas).

Ion-exchange fibrous materials or ion-conducting spacers can also be used in place of ion-exchange resin beads as ion exchangers placed in the deionization compartment in the electrical deionization apparatus according to the first aspect of the present invention. The concentration compartment can be packed with ion-conducting spacers. That is, ion exchangers that can be preferably used include ion-exchange fibrous materials formed by introducing an ion exchange group onto a sheet-like substrate formed of a fibrous material such as woven or nonwoven fabric, or ion-conducting spacers formed by introducing an ion exchange group onto a substrate such as a net. Such ion exchangers can be used by e.g. oppositely placing ion-conducting spacers in the deionization compartment and/or concentration compartment or inserting an ion-conducting spacer between ion-exchange fibrous materials oppositely placed in the deionization compartment. The use of such ion-exchange fibrous materials or ion-conducting spacers also has the advantage that weak electrolytes that cannot be sufficiently removed by ion-exchange resin beads such as silica and ions containing organic carbon (TOC) components such as alcohols or other organic chemicals can be effectively removed.

Ion-exchange fibrous materials that can be preferably used in the electrical deionization apparatus according to the present invention include those obtained by introducing an ion exchange group into a polymer fibrous substrate by graft polymerization. The substrate to be grafted consists of a polymer fiber that may be either a monofilament fiber formed of a single polymer such as a polyolefin polymer, e.g. polyethylene or polypropylene or a composite fiber formed of different core and sheath polymers. Examples of suitable composite fibers include those having a core-sheath structure comprising a sheath formed of a polyolefin polymer such as polyethylene and a core formed of a polymer other than used for the sheath such as polypropylene. Ion-exchange fibrous materials used in the present invention are preferably those obtained by introducing an ion exchange group into such a composite fibrous material by radiation-induced graft polymerization because they provide excellent ion exchange capacity and can be prepared in a homogeneous thickness with low dissolved TOC.

Ion-exchange fibrous materials can be more preferably used as ion exchangers than ion-exchange resin beads because they can eliminate difficulties associated with beads such as the necessity of closely packing beads, the necessity of keeping inflow into the deionization compartment at a high pressure in view of closely packed beads, the possibility of uneven distribution due to the shape of beads, the necessity of homogeneously mixing beads, and the necessity of controlling the void fraction in packed beads. When ion-exchange fibrous materials are to be prepared by graft polymerization, especially preferred substrate for obtaining good and stable effluent water quality is nonwoven fabrics having a thickness of 0.1-1.0 mm, an areal density of 10-100 g/m$^2$, a void fraction of 50-98% and a fiber diameter

of 10-70 $\mu$m.

Preferred ion-conducting spacers are obtained by conferring an ion-exchange function by radiation-induced graft polymerization on a substrate consisting of a polyolefin polymer such as a polyethylene diagonal net conventionally used in electric dialyzers because of the excellent ionic conductivity and influent dispersibility. Radiation-induced graft polymerization is a technique by which a polymer substrate is irradiated to produce a radical and the radical is reacted with a monomer to introduce the monomer into the substrate.

Radiations that can be used in radiation-induced graft polymerization include $\alpha$-rays, $\beta$-rays, $\gamma$-rays, electron rays, UV ray, etc., among which $\gamma$-rays and electron rays are preferably used in the present invention. Radiation-induced graft polymerization includes pre-irradiation graft polymerization involving preliminarily irradiating a graft substrate (trunk polymer) and then bringing it into contact with a graft monomer for reaction, and simultaneous irradiation graft polymerization involving simultaneously irradiating a substrate and a monomer, and either method can be used in the present invention. Radiation-induced graft polymerization includes various manners of contact between a monomer and a substrate, such as liquid phase graft polymerization performed with a substrate immersed in a monomer solution, gas phase graft polymerization performed with a substrate in contact with the vapor of a monomer, or immersion gas phase graft polymerization performed by immersing a substrate in a monomer solution and then removing it from the monomer solution for reaction in a gas phase, and any method can be used in the present invention.

Ion exchange groups to be introduced into these fibrous substrates and spacer substrates are not specifically limited, but various cation exchange groups or anion exchange groups can be used. For example, suitable cation exchange groups include strongly acidic cation exchange groups such as sulfone, medium acidic cation exchange groups such as phosphate, and weakly acidic cation exchange groups such as carboxyl, and suitable anion exchange groups include weakly basic anion exchange groups such as primary to tertiary amino groups and strongly basic anion exchange groups such as quaternary ammonium groups, or ion exchangers having both cation exchange and anion exchange groups as described above can also be used.

These various ion exchange groups can be introduced into fibrous substrates or spacer substrates by graft polymerization, preferably radiation-induced graft polymerization using monomers having these ion exchange groups or using polymerizable monomers having a group capable of being converted into one of these ion exchange groups and then converting said group into the ion exchange group. Monomers having an ion exchange group that can be used for this purpose include acrylic acid (AAc), methacrylic acid, sodium styrenesulfonate (SSS), sodium methacryl sulfonate, sodium allyl sulfonate, sodium vinyl sulfonate, vinyl benzyl trimethyl ammonium chloride (VBTAC), diethyl aminoethyl methacrylate (DMAEMA), dimethyl aminopropyl acrylamide (DMAPAA), etc. For example, a strongly acidic cation exchange group such as a sulfone group can be directly introduced into a substrate by radiation-induced graft polymerization using sodium styrenesulfonate as a monomer, or a strongly basic anion exchange group such as a quaternary ammonium group can be directly introduced into a substrate by radiation-induced graft polymerization using vinyl benzyl trimethyl ammonium chloride as a monomer. Monomers having a group capable of being converted into an ion exchange group include acrylonitrile, acrolein, vinyl pyridine, styrene, chloromethylstyrene, glycidyl methacrylate (GMA), etc. For example, a strongly acidic cation exchange group such as a sulfone group can be introduced by introducing glycidyl methacrylate by radiation-induced graft polymerization into a substrate and then reacting it with a sulfonating agent such as sodium sulfite, or a strongly basic anion exchange group such as a quaternary ammonium group can be introduced by graft-polymerizing chloromethylstyrene to a substrate and then immersing the grafted substrate in an aqueous trimethylamine solution to functionalize it with a quaternary ammonium group.

Ion exchangers to be introduced into the deionization compartment and/or concentration compartment of the electrical deionization apparatus are preferably a cation exchanger having a sulfone group as a strongly acidic cation exchange group and an anion exchanger having a quaternary ammonium group as a strongly basic anion exchange group. This is because water splits well between the strongly acidic cation exchange group and the strongly basic anion exchange group at the interface between the cation exchanger and the anion exchanger to generate $H^+$ ions and $OH^-$ ions necessary for regenerating the ion exchangers as explained above, and these ion exchangers have a very high ability to remove ions by adsorption.

The first aspect of the present invention is characterized in that at least a part of the ion exchanger in various forms as described above placed in the deionization compartment and/or concentration compartment, preferably at least in the deionization compartment of the electrical deionization apparatus as described above has a plurality of different functional groups at the interface with an oppositely charged ion exchanger and/or ion exchange membrane.

Such a plurality of different functional groups that can be preferably used include combinations of at least one strongly acidic cation exchange group and non-strongly acidic cation exchange group or nonionic exchange group, or combinations of at least one strongly basic anion exchange group and non-strongly basic anion exchange group or nonionic exchange group. Preferred strongly acidic cation exchange groups include sulfone ($-SO_3^-$), and preferred strongly basic anion exchange groups include quaternary ammonium salt groups ($-N^+R_3$) such as trimethylammonium ($-N^+(CH_3)_3$), triethylammonium ($-N^+(C_2H_5)_3$) and dimethylethanol ammonium ($-N^+(CH_3)_2(C_2H_5OH)$). Preferred non-strongly acidic or non-strongly basic ion exchange groups include weakly acidic cation exchange groups such as carboxyl (-COOH), medium acidic cation exchange groups such as phosphate (-PO$_3$H$_2$), weakly basic anion exchange groups such as primary amino (-NH$_2$), secondary amino (-NRH) and tertiary amino (-NR$_2$) groups, and nonionic hydrophilic groups such as hydroxyl (-OH) and amide (-CONH$_2$). Nonionic hydrophilic groups can be introduced into a substrate by graft-polymerizing a polymerizable monomer having a nonionic hydrophilic group or graft-polymerizing a polymerizable monomer having a group capable of being converted into a nonionic hydrophilic group and then converting said group into the nonionic hydrophilic group. Polymerizable monomers having a nonionic hydrophilic group include e.g. N,N-dimethylacrylamide, acrylamide, dimethylacrylamide, methacrylamide, isopropylacrylamide, 2-hydroxyethyl methacrylate, etc. For example, a nonionic hydrophilic group hydroxyl can be introduced into a substrate by graft-polymerizing glycidyl methacrylate onto a substrate and then heating the grafted substrate in an aqueous sulfuric acid solution to ring-open the epoxy group, resulting in a diol.

In the first aspect of the present invention, the ion exchanger having a plurality of different functional groups placed in the deionization compartment and/or concentration compartment of the electrical deionization apparatus can be formed by selecting a plurality of different functional groups from various functional groups shown above and introducing the plurality of functional groups selected into a substrate using the methods shown above. For example, an ion exchanger having a plurality of different functional groups can be formed by using vinyl benzyl trimethylammonium chloride as a polymerizable monomer having a quaternary ammonium group as a strongly basic anion exchange group and N,N-dimethylacrylamide as a polymerizable monomer having an amide group as a nonionic group and graft-polymerizing a mixed solution of these monomers onto a fibrous substrate or spacer substrate.

When ion-exchange resin beads are to be placed as an ion exchanger in the deionization compartment and/or concentration compartment of the electrical deionization apparatus, the ion-exchange resin beads having a plurality of functional groups can be formed by a method known in the art. For example, cation-exchange resin beads having a strongly acidic cation exchange group and a weakly acidic cation exchange group can be formed by condensation polymerization of phenolsulfonic acid with formaldehyde and phenol to synthesize a resin having a sulfone group and a phenol group. Anion-exchange resin beads having a strongly basic anion exchange group and a weakly basic anion exchange group can be formed by mixing chloromethylstyrene and divinylbenzene for suspension polymerization in water using an initiator and then performing a secondary reaction with an aqueous mixed solution of trimethylamine and dimethylamine to synthesize an anion exchange resin having a trimethylammonium group and a dimethylamide group.

In the ion exchanger having a plurality of different functional groups used in the first aspect of the present invention, at least one ion exchange group is a strongly acidic or strongly basic ion exchange group, which is preferably used in combination with a weakly acidic or weakly basic ion exchange group and/or nonionic hydrophilic group. Specifically, a strongly acidic cation exchange group is preferably combined with a weakly acidic cation exchange group in a ratio of strongly acidic cation exchange group : weakly acidic cation exchange group = 1:1-1:3 expressed in ion exchange capacity, especially sulfone group (sodium styrenesulfonate) : carboxyl group (acrylic acid) = 1:1.70, for example. A strongly basic anion exchange group is preferably combined with a weakly basic anion exchange group in a ratio of strongly basic anion exchange group ; weakly basic anion exchange group = 1:0.01-1:0.1 expressed in ion exchange capacity, especially quaternary ammonium group (trimethylamine) : tertiary amino group (dimethylamine) = 1:0.01, for example. A strongly basic anion is preferably combined with a nonionic functional group in a ratio of 1:1-1:3 expressed in ion exchange capacity, especially quaternary ammonium group (vinyl benzyl trimethylammonium chloride) : nonionic hydrophilic group (N,N-dimethylacrylamide) = 1:2.4, for example. Non-strongly acidic and non-strongly basic functional groups can be introduced enough to provide steric hindrance to ionic bond formation between strongly acidic and strongly basic ion exchange groups and an electric field not affecting water splitting can be maintained at the interface between differently charged ion exchangers by using the strongly acidic or strongly basic ion exchange groups and the non-strongly acidic or non-strongly basic functional groups in a ratio within the ranges above,.

Combinations of a plurality of different functional groups used in the first aspect of the present invention include combinations of a strongly acidic cation exchange group and a medium to weakly acidic cation exchange group or a nonlonic functional group, and combinations of a strongly basic anion exchange group and a medium to weakly basic anion exchange group or a nonionic functional group. Specific examples include combinations of quaternary ammonium-dimethylamide, quaternary ammonium-tertiary amino, sulfone-carboxyl, quaternary ammonium-hydroxyl, sulfone-hydroxyl, etc.

In the electrical deionization apparatus according to the first aspect of the present invention, an ion exchanger is placed in the deionization compartment and/or concentration compartment and at least a part of said ion exchanger has a plurality of different functional groups at the interface with an oppositely charged ion exchanger and/or ion exchange membrane as explained above, thereby inhibiting ionic bond formation between cation exchange groups and anion exchange groups by the presence of the different functional groups and eliminating the problem of hindrance to water splitting. When a nonionic functional group such as a dimethylamide group (-CO-N(CH$_3$)$_2$) is further included in the graft chain of an anion exchanger having a quaternary ammonium group (-N$^+$(CH$_3$)$_3$) as an anion exchange group at the interface with a cation exchanger having a sulfone group (-SO$_3^-$) as a cation exchange group as shown in FIG.

4, for example, this dimethylamide group provides steric hindrance, i.e. expands the distance between the anion exchange and cation exchange groups to inhibit ionic bond formation between the sulfone and quaternary ammonium groups. This reduces the problem of ionic bond formation impeding the water splitting under the interaction between cation exchange groups and anion exchange groups, and therefore reduces the problem of buildup of the operating voltage of the electrical deionization apparatus by prolonged operation.

When a cation-exchange fibrous material and an anion-exchange fibrous material are oppositely placed as ion exchangers on the cation exchange membrane side and the anion exchange membrane side, respectively and an ion-conducting spacer having a plurality of different functional groups is used between these ion-exchange fibrous materials in the first aspect of the present invention, the influent flows more dispersively so that the increase in the operating voltage can be significantly reduced and at the same time the deionization efficiency is remarkably improved by its ion-trapping function, whereby carbonate components, silica components and organic carbon (TOC) components can be effectively removed.

Ion-conducting spacers to be used in this aspect can be formed in appropriate shapes and sizes so far as they satisfy conditions such as dispersive influent flow as a turbulent flow, close proximity between the spacers and ion exchangers, generation of less dissolved or particulate matters and small pressure loss, and specific examples sufficiently satisfying all these conditions are diagonal nets. The total thickness of preferred nets that can increase the throughput with small pressure loss ranges from 0.3 to 1.5 mm, and a plurality of very thin spacers can also be used so far as the total thickness is within this range. When a plurality of ion-conducting spacers are used, an ion-conducting spacer having a plurality of different anion exchange groups is preferably placed on the anion exchanger side and an ion-conducting spacer having a plurality of different cation exchange groups is placed on the cation exchanger side. However, the arrangement of ion-conducting spacers are not limited to the above, but depends on the influent water quality and a plurality of only ion-conducting spacers having a plurality of different anion exchange groups or only ion-conducting spacers having a plurality of different cation exchange groups may be placed between ion exchangers. Alternatively, an ion-conducting spacer having a conventional single ion exchange group and/or an ion-conducting spacer having a plurality of different functional groups may be placed between ion exchangers having a plurality of different functional groups.

In the electrical deionization apparatus of the present invention, an anion exchanger, a cation exchanger, and optionally an ion-conducting spacer are preferably inserted in a deionization compartment and/or concentration compartment having a thickness of 2.5-5 mm. The thickness of each member can be appropriately determined considering the influent flow rate, pressure loss, influent water quality, voltage and other factors.

Referring to the attached drawings, the first aspect of the present invention is further explained in detail below.

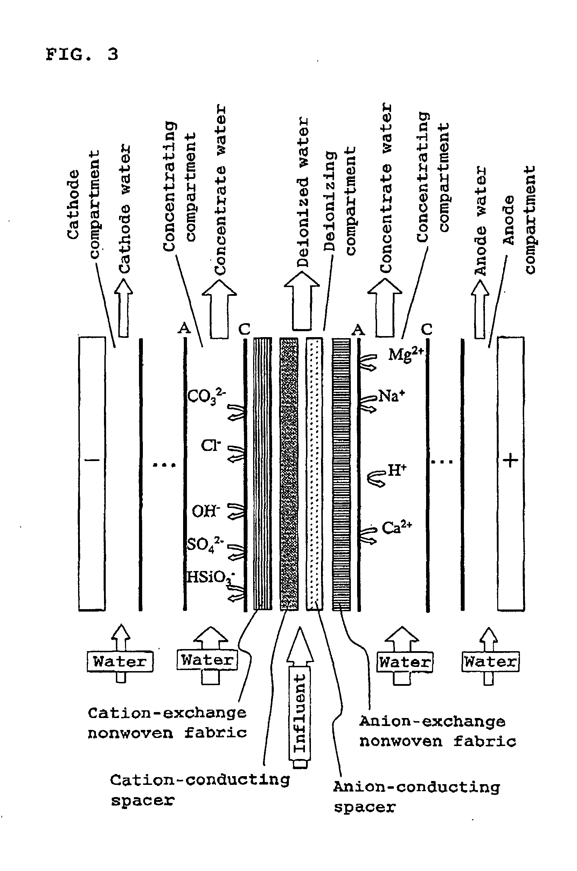

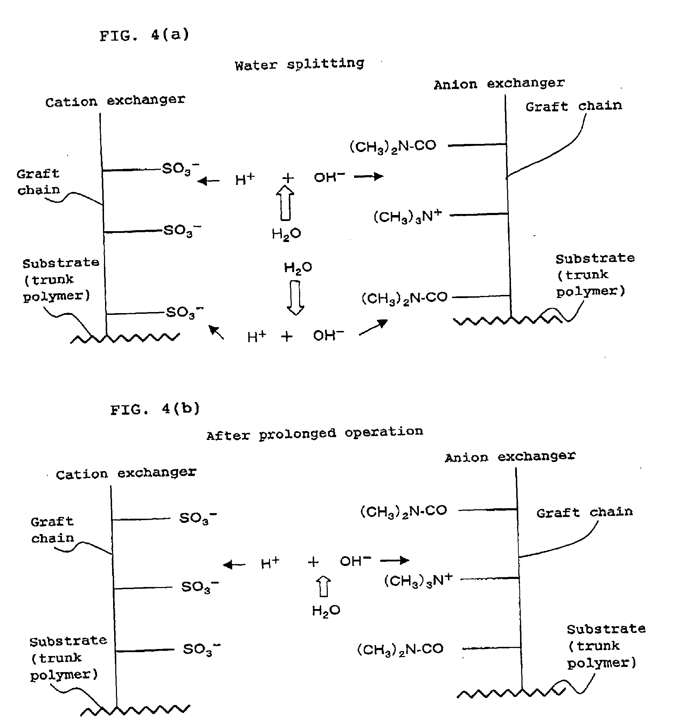

FIG. 3 is a schematic view of an electrical deionization apparatus according to a preferred embodiment of the first aspect of the present invention, and FIG. 4 is an enlarged schematic view of the interface between an anion exchanger and a cation exchanger in a deionization compartment of the electrical deionization apparatus according to the preferred embodiment of the first aspect of the present invention.

As shown in FIG. 3, the electrical deionization apparatus according to the preferred embodiment of the first aspect of the present invention comprises anion exchange membranes A and cation exchange membranes C at least partially alternately arranged between an anode and a cathode to form a deionization compartment and a concentration compartment. At least in the deionization compartment, a cation-exchange nonwoven fabric consisting of a cation-exchange fibrous material and an anion-exchange nonwoven fabric consisting of an anion-exchange fibrous material are oppositely placed, and a cation-conducting spacer is placed on the side of the cation-exchange nonwoven fabric and an anion-conducting spacer having a plurality of different functional groups is placed on the side of the anion-exchange nonwoven fabric, respectively. In the embodiment shown in the figure, only a single cell (concentration compartment / deionization compartment / concentration compartment) is shown, but multiple deionization cells (combinations of concentration compartment / deionization compartment / concentration compartment) may be arranged in parallel between the electrodes by repeating the sequence of cation exchange membranes and anion exchange membranes, if desired. The sequence of ion exchange membranes may partially include a sequence of ion exchange membranes of the same type.

The anion-conducting spacer placed in the deionization compartment in FIG. 3 is an ion exchanger formed by introducing a plurality of different functional groups into a diagonal net substrate by graft polymerization. FIG. 4 schematically shows the interface between an anion exchanger and a cation exchanger in the deionization compartment in an enlarged scale. FIG. 4 shows a graft chain of a cation exchanger having sulfone groups ($SO_3^-$) and a graft chain of an anion exchanger having dimethylamide groups ($(CH_3)_2N-CO$) and trimethyl ammonium groups ($(CH_3)CN^+$) opposed to each other in an enlarged scale.

Next, the operation of the electrical deionization apparatus according to the first aspect of the present invention shown in FIGs. 3 and 4 is explained. When a DC voltage is applied between the cathode and the anode and an influent is passed, cations such as $Ca^{2+}$, $Mg^{2+}$ and $Na^+$ in the influent are ion-exchanged by the cation exchanger in the deionization compartment, transported from the cation exchanger through the cation exchange membrane into the concentration compartment under an electric field and discharged as a concentrate water. On the other hand, anions such as Cl⁻ and $SO_4^{2-}$ in the influent are ion-exchanged by the anion exchanger in the deionization compartment, transported from the anion exchanger through the anion exchange membrane into the concentration compartment under an electric field and discharged as a concentrate water.

During then, water splits under the influence of an electric field generated by cation exchange groups $SO_3^-$ and anion exchange groups $(CH_3)_2N-CO$ and $(CH_3)_3N^+$ in proximity to each other at the interface between the graft chain of the cation-conducting spacer and the graft chain of the anion-conducting spacer so that $H^+$ ions are attracted toward the cation exchanger and OH- ions are attracted toward the anion exchanger, as shown in FIG. 4(a). As the operation is prolonged, $SO_3^-$ ions of the strongly acidic cation exchanger more and more bind to $(CH_3)_2N-CO$ ions of the weakly basic anion exchanger, which are bulky and less distant from the cation exchange groups, but the bulky $(CH_3)_2N-CO$ ions of the weakly basic anion exchanger inhibit the strongly acidic ion exchange groups $SO_3^-$ from binding to strongly basic ion exchange groups $(CH_3)_3N^+$, which are smaller ions also contained in the anion exchanger in addition to the weakly basic ion exchange groups $(CH_3)_2N-CO$ and more distant from the cation exchange groups, whereby charges are maintained and OH- ions are continuously attracted toward the anion exchanger. Thus, water splitting continually occurs to prevent buildup of the voltage required for water splitting.

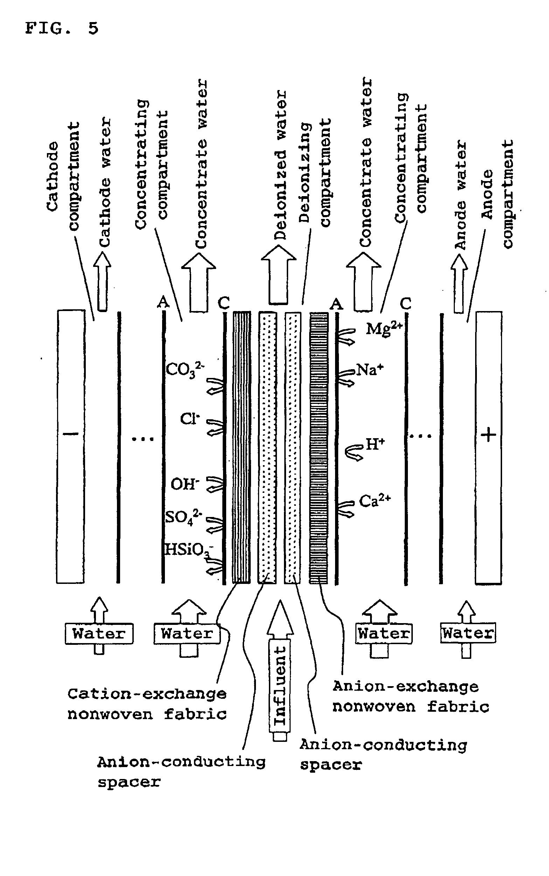

FIG. 5 schematically shows an electrical deionization apparatus according to another preferred embodiment of the first aspect of the present invention. The electrical deionization apparatus according to this embodiment comprises two pieces of an anion-conducting spacer having a plurality of different functional groups between a cation-exchange nonwoven fabric and an anion-exchange nonwoven fabric opposed to each other in a deionization compartment. In this case, water splitting between the anion exchanger and the cation exchanger occurs between the cation-exchange nonwoven fabric and the anion-conducting spacer.

Next, a second aspect of the present invention is characterized in that the ion exchanger placed in the deionization compartment and/or concentration compartment has a two-stage graft chain at least partially at the interface between anion exchange groups and cation exchange groups.

Accordingly, the second aspect of the present invention provides an electrical deionization apparatus comprising cation exchange membranes and anion exchange membranes at least partially alternately arranged between an anode and a cathode to form deionization compartment and concentration compartment and further comprising an ion exchanger in said deionization compartment and/or concentration compartment, characterized in that at least a part of said ion exchanger has a graft chain having an ion exchange group on the backbone of an organic polymer substrate (trunk polymer) and further has a second graft chain on said graft chain. In the electrical deionization apparatus according to the second aspect of the present invention, the ion exchanger, especially the ion exchanger having a graft chain having an ion exchange group on the backbone of an organic polymer substrate and further having a second graft chain on said graft chain is more preferably placed at least in the deionization compartment.

In the second aspect of the present invention, the "ion exchanger" may be any type so far as it has at least one ion exchange group and means to include e.g. fibers or woven or nonwoven fabrics or spacer substrates such as diagonal nets having at least one ion exchange group, specifically ion exchange fibers, ion-exchange nonwoven fabrics, ion-exchange woven fabrics, ion-conducting nets, ion-conducting diagonal nets and ion exchange membranes. These various ion exchangers can be used in various forms described above. The deionization compartment is preferably packed with an ion exchange fiber, ion-exchange nonwoven fabric, ion-exchange woven fabric, ion-conducting net, ion-conducting diagonal net or the like as described above, while the concentration compartment is preferably packed with an ion-conducting net, ion-conducting diagonal net or the like as described above.

In the second aspect of the present invention, an ion exchanger having a graft chain having an ion exchange group on the backbone of an organic polymer substrate and further having a second graft chain on said graft chain is used as at least one ion exchanger at least partially in the water splitting zone, i.e. the interface between cation exchange groups and anion exchange groups. That is, said ion exchanger is characterized in that it has a first graft chain having an ion exchange group on the backbone of a substrate and then a second graft chain on said graft chain. When a first graft chain is further extended by a second graft chain, the second graft chain provides steric hindrance to attraction and ionic bond formation between ion exchange groups on the first graft chain and oppositely charged ion exchange groups. In the second aspect of the present invention, such a mechanism inhibits the neutralization reaction of the formula above to prevent buildup of the voltage required for water splitting and therefore prevent buildup of the operating voltage of the electrical deionization apparatus. Further according to the second aspect of the present invention, the distance between anion exchange groups and cation exchange groups can be adjusted by controlling the reaction conditions of the second-stage graft polymerization to control the length of the second-stage graft chain, whereby an optimal distance for water splitting can be maintained between functional groups.

The second aspect of the present invention is characterized in that at least a part of the ion exchanger in various forms as described above placed in the deionization compartment and/or concentration compartment, preferably at least in the deionization compartment of the electrical deionization apparatus as described above in relation to the first and second aspects of the present invention has a graft chain having an ion exchange group on the backbone of an organic polymer substrate and further has a second graft chain on said graft chain. Said ion exchanger is preferably placed at least in the deionization compartment.

Such a graft chain having a two-stage graft structure can be formed by performing first graft polymerization onto an organic polymer substrate to form a graft chain having an ion exchange group followed by second graft polymerization. During the first graft polymerization, various monomers described above can be used to introduce various ion exchange groups into the substrate. During the second graft polymerization, various monomers described above can be used to form a second graft chain having various ion exchange groups on the first graft chain or to form a second graft chain having a nonionic hydrophilic group such as hydroxyl or amide on the first graft chain. For example, a second graft chain having a nonionic hydrophilic group can be formed on the first graft chain by graft-polymerizing a polymerizable monomer having the nonionic hydrophilic group or graft-polymerizing a polymerizable monomer capable of being converted into the nonionic hydrophilic group and then converting said group into the nonionic hydrophilic group during the second graft polymerization. Polymerizable monomers having a nonionic hydrophilic group that can be used for this purpose include e.g. N,N-dimethylacrylamide, acrylamide, dimethylacrylamide, methacrylamide, isopropylacrylamide, 2-hydroxyethyl methacrylate, etc. For example, a nonionic hydrophilic group such as a hydroxyl group can be introduced into a first graft chain by graft-polymerizing glycidyl methacrylate onto the first graft chain and then heating the substrate in an aqueous sulfuric acid solution to ring-open the epoxy group, resulting in a diol.

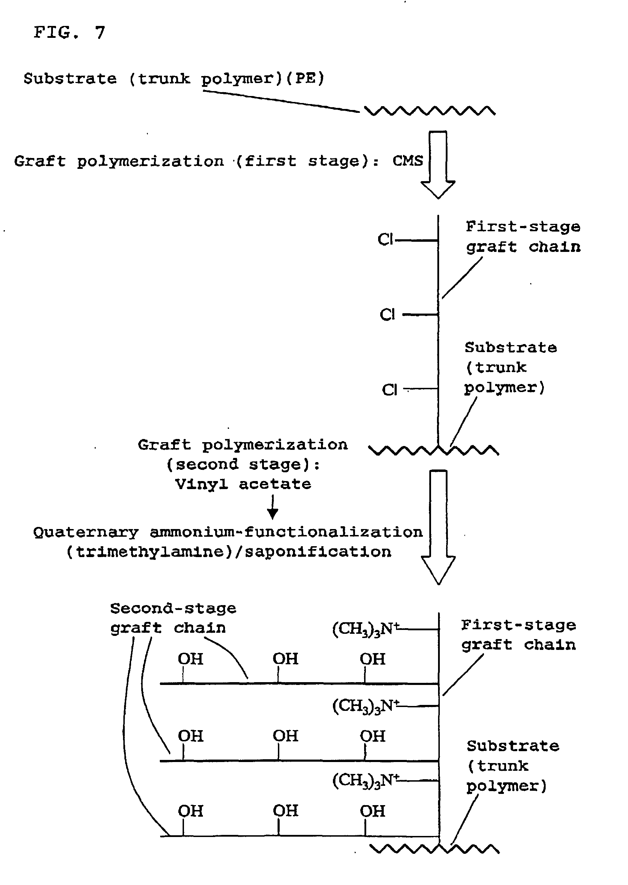

For example, a second graft chain having a nonionic hydrophilic group such as a hydroxyl group can be formed on a first graft chain having a strongly basic anion exchange group such as a quaternary ammonium group by first using chloromethylstyrene (CMS) as a graft monomer for first stage graft polymerization onto a polymer substrate, then using vinyl acetate as a graft monomer for second stage graft polymerization, then functionalizing the grafted substrate with a quaternary ammonium group by immersion in an aqueous trimethylamine solution, and then saponifying and regenerating the substrate in an aqueous sodium hydroxide solution, as shown in FIG. 7. Similarly, a second graft chain having a weakly acidic cation exchange group such as a carboxyl group can be formed on a first graft chain having a strongly acidic cation exchange group such as a sulfone group by first using sodium styrenesulfonate as a graft monomer for first stage graft polymerization to form the first graft chain having a sulfone group and then using methacrylic acid as a graft monomer for second graft polymerization, for example.

In the two-stage graft ion exchanger according to the second aspect of the present invention, the functional group on the first graft chain and the functional group on the second graft chain on the same substrate are preferably a combination of similarly charged ion exchange groups or a combination of an ion exchange group and a non-ion exchange group. This is because an anion exchange group and a cation exchange group may form ionic bonds if they are introduced into the same substrate. Thus, preferred combinations of functional groups to be introduced into the same substrate by two-stage graft polymerization include combinations of a strongly acidic cation exchange group and a weakly acidic cation exchange group, combinations of a strongly basic anion exchange group and a weakly basic anion exchange group, and combinations of a strongly acidic cation exchange group or strongly basic anion exchange group and a nonionic hydrophilic group. Further in view of the mechanism of the second aspect of the present invention by which the second stage graft chain provides steric hindrance to ionic bond formation between ion exchange groups on the first stage graft chain and oppositely charged ion exchange groups, the first stage graft chain preferably has a strongly acidic cation exchange group or strongly basic anion exchange group in the two-stage graft ion exchanger according to the second aspect of the present invention. A specific example of a suitable two-stage graft cation exchanger according to the second aspect of the present invention is an ion exchanger having a sulfone group on the first stage graft chain and a carboxyl group or a hydroxyl group on the second stage graft chain, and a specific example of a suitable two-stage graft anion exchanger according to the second aspect of the present invention is an ion exchanger having a quaternary ammonium group on the first stage graft chain and a tertiary amine group or a hydroxyl group on the second stage graft chain.

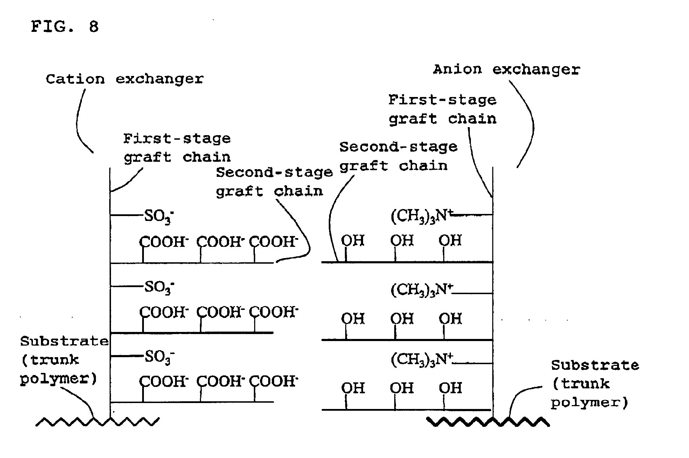

In the electrical deionization apparatus according to the second aspect of the present invention, an ion exchanger is placed in the deionization compartment and/or concentration compartment and at least a part of said ion exchanger has a graft chain having an ion exchange group on the backbone of an organic polymer substrate and further has a second graft chain on said graft chain as described above, whereby the second (i.e. second stage) graft chain provides steric hindrance to ionic bond formation between ion exchange groups (quaternary ammonium group: $-N^+(CH_3)_3$ and sulfone group: $-SO_3^-$ in FIG. 8) on the first (first stage) graft chains, as schematically shown in FIG. 8, for example. This reduces the problem of ionic bond formation impeding the water splitting under the interaction between cation exchange groups and anion exchange groups as shown in FIG. 2(b), and therefore reduces the problem of buildup of the operating voltage of the electrical deionization apparatus by prolonged operation. Further according to the second aspect of the present invention, it is presumed that the ion exchange capacity or other properties of the ion exchanger can be modified by controlling the reaction conditions of the second-stage graft polymerization to control the length of the second stage graft chain.

When a cation-exchange fibrous material and an anion-exchange fibrous material are oppositely placed as ion exchangers on the cation exchange membrane side and the anion exchange membrane side, respectively and an ion-conducting spacer having a graft chain having an ion exchange group on the backbone of an organic polymer substrate and further having a second graft chain on said graft chain according to the second aspect of the present invention is used between these ion-exchange fibrous materials in the second aspect of the present invention, the influent flows more dispersively so that the increase in the operating voltage can be significantly reduced and at the same time the deionization efficiency is remarkably improved by its ion-trapping function, whereby carbonate components, silica components and organic carbon (TOC) components can be effectively removed.

Ion-conducting spacers used in this aspect can be in the form of diagonal nets or the like described above in relation to the first aspect the present invention. When a plurality of ion-conducting spacers are used, an anion-conducting spacer having a graft chain having an anion exchange group on the backbone of an organic polymer substrate and further having a second graft chain on said graft chain according to the second aspect of the present invention is preferably placed on the side of the anion-exchange fibrous material, and a cation-conducting spacer having a graft chain having a cation exchange group on the backbone of an organic polymer substrate and further having a second graft chain on said graft chain according to the second aspect of the present invention is placed on the side of the cation-exchange fibrous material. However, the arrangement of ion-conducting spacers is not limited to the above, but depends on the influent water quality and a plurality of only anion-conducting spacers having a graft chain having an anion exchange group on the backbone of an organic polymer substrate and further having a second graft chain on said graft chain or only cation-conducting spacers having a graft chain having a cation exchange group on the backbone of an organic polymer substrate and further having a second graft chain on said graft chain may be placed between ion-exchange fibrous materials. Alternatively, an ion-conducting spacer having a conventional graft chain and/or an ion-conducting spacer having a graft chain having an ion exchange group on the backbone of an organic polymer substrate and further having a second graft chain on said graft chain may be placed between ion-exchange fibrous materials having a graft chain having an ion exchange group on the backbone of an organic polymer substrate and further having a second graft chain on said graft chain.

Referring to the attached drawings, the second aspect of the present invention is further explained in detail below. The following description illustrates a preferred embodiment of an electrical deionization apparatus according to the second aspect of the present invention without limiting the present invention thereto.

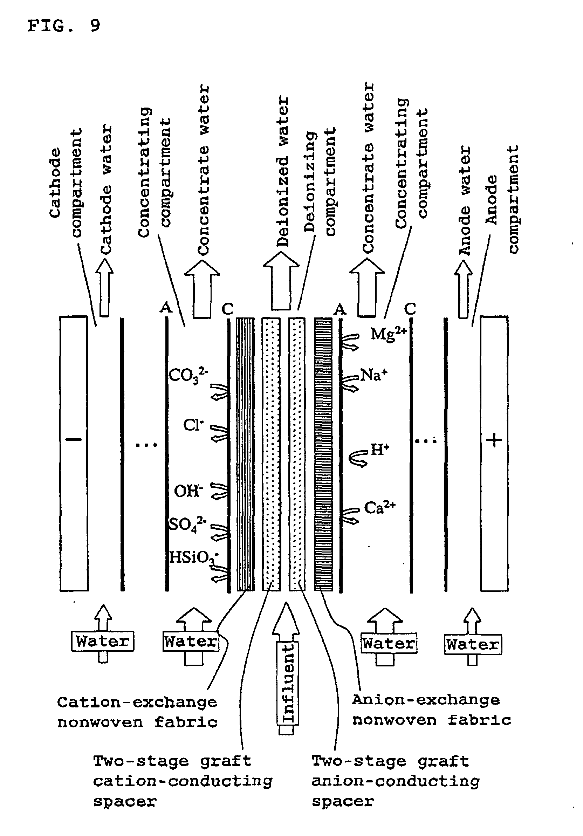

FIG. 9 is a schematic view of an electrical deionization apparatus according to a preferred embodiment of the second aspect of the present invention. The electrical deionization apparatus shown in FIG. 9 comprises anion exchange membranes A and cation exchange membranes C at least partially alternately arranged between an anode and a cathode to form a deionization compartment and a concentration compartment. At least in the deionization compartment, a cation-exchange nonwoven fabric consisting of a cation-exchange fibrous material and an anion-exchange nonwoven fabric consisting of an anion-exchange fibrous material are oppositely placed, and a cation-conducting spacer having a two-stage graft structure is placed on the side of the cation-exchange nonwoven fabric and an anion-conducting spacer having a two-stage graft structure is placed on the side of the anion-exchange nonwoven fabric, respectively, between these fibrous materials. In the embodiment shown in the figure, only a single cell (concentration compartment / deionization compartment / concentration compartment) is shown, but multiple deionization cells (combinations of concentration compartment / deionization compartment / concentration compartment) may be arranged in parallel between the electrodes by repeating the sequence of cation exchange membranes and anion exchange membranes, if desired. The sequence of ion exchange membranes may partially include a sequence of ion exchange membranes of the same type.

The anion-conducting spacer and cation-conducting spacer placed in the deionization compartment shown in FIG. 9 are ion exchangers having a first graft chain having an ion exchange group on the backbone of a diagonal net substrate (trunk polymer) and further having a second graft chain on said first graft chain.

Next, the operation of the electrical deionization apparatus according to an embodiment of the second aspect of the present invention shown in FIG. 9 is explained. When a DC voltage is applied between the cathode and the anode and an influent is passed, cations such as $Ca^{2+}$, $Mg^{2+}$ and $Na^+$ in the influent are ion-exchanged by the cation exchanger in the deionization compartment, transported from the cation exchanger through the cation exchange membrane into the concentration compartment under an electric field and discharged as a concentrate water. On the other hand, anions such as $Cl^-$ and $SO_4^{2-}$ in the influent are ion-exchanged by the anion exchanger in the deionization compartment, transported from the anion exchanger through the anion exchange membrane into the concentration compartment under an electric field and discharged as a concentrate water.

During then, water splits under the influence of an electric field generated by cation exchange groups ($SO_3^-$ in FIG. 2) and anion exchange groups (($CH_3)_3N^+$ in FIG. 2) in proximity to each other at the interface between the cation-conducting spacer and the anion-conducting spacer so that $H^+$ ions are attracted toward the cation exchanger and $OH^-$ ions are attracted toward the anion exchanger, as shown in FIG. 2(a). As the operation is prolonged, no more water splits because charges are neutralized by ionic bond formation between cation exchange groups and anion exchange groups in proximity to each other (FIG. 2(b)). In the second aspect of the present invention, however, water splitting continually occurs because these ion-conducting spacers have a two-stage graft structure further having a second graft chain on a first graft chain having an ion exchange group as shown in FIG. 8, so that the second graft chain provides steric hindrance to ionic bond formation between ion exchange groups (sulfone group: $-SO_3^-$ and quaternary ammonium group: $-(CH_3)_3N^+$ in FIG. 8) present on the first graft chains and charges are maintained. This prevents the operating voltage from being increased by inhibition of water splitting after prolonged operation.

Although FIG. 9 shows an embodiment wherein an anion exchange spacer having a two-stage graft structure is placed on the side of an anion-exchange nonwoven fabric and a cation exchange spacer having a two-stage graft structure is placed on the side of a cation-exchange nonwoven fabric in a deionization compartment, only the anion exchange spacer can be placed between these ion-exchange nonwoven fabrics, for example.

Next, a third aspect of the present invention is characterized in that the ion exchanger placed in the deionization compartment and/or concentration compartment has a crosslinked graft chain having an ion exchange group at least partially at the interface between anion exchange groups and cation exchange groups.

Accordingly, the third aspect of the present invention provides an electrical deionization apparatus comprising cation exchange membranes and anion exchange membranes at least partially alternately arranged between an anode and a cathode to form deionization compartment and concentration compartment and further comprising an ion exchanger in said deionization compartment and/or concentration compartment, characterized in that at least a part of said ion exchanger has a crosslinked graft chain having an ion exchange group on the backbone of an organic polymer substrate. In the electrical deionization apparatus according to the third aspect of the present invention, the ion exchanger, especially the ion exchanger having a crosslinked graft chain having an ion exchange group on the backbone of an organic polymer substrate is more preferably placed at least in the deionization compartment.

In the third aspect of the present invention, the "ion exchanger" may be any type so far as it has at least one ion exchange group and means to include e.g. fibers or woven or nonwoven fabrics or spacer substrates such as diagonal nets having at least one ion exchange group, specifically ion exchange fibers, ion-exchange nonwoven fabrics, ion-exchange woven fabrics, ion-conducting nets, ion-conducting diagonal nets and ion exchange membranes. These various ion exchangers can be used in various forms described above. The deionization compartment is preferably packed with an ion exchange fiber, ion-exchange nonwoven fabric, ion-exchange woven fabric, ion-conducting net, ion-conducting diagonal net or the like as described above, while the concentration compartment is preferably packed with an ion-conducting net, ion-conducting diagonal net or the like as described above.

In the third aspect of the present invention, an ion exchanger having a crosslinked graft chain having an ion exchange group on the backbone of an organic polymer substrate is used as at least one ion exchanger at least partially in the water splitting zone, i.e. the interface between cation exchange groups and anion exchange groups, whereby the degree of freedom of the graft chain having an ion exchange group is decreased. If the graft chain does not have a crosslinked structure, ionic bonds are more easily formed between ion exchange groups because the graft chain is readily deformed by the attraction between charges of the ion exchange groups to shorten the distance between the ion exchange groups. In the third aspect of the present invention, however, no ionic bond is formed between ion exchange groups apart from each other because the graft chain has a crosslinked structure to decrease the degree of freedom of the graft chain so that the graft chain is not deformed even by the attraction between charges of ion exchange groups. The crosslinked graft chain forms a crosslinked matrix into which other graft chains cannot penetrate and therefore, ion exchange groups present in the matrix of the crosslinked graft chain form no ionic bond. In the third aspect of the present invention, such a mechanism inhibits the neutralization reaction of the formula above to prevent buildup of the voltage required for water splitting and therefore prevent buildup of the operating voltage of the electrical deionization apparatus.

The third aspect of the present invention is characterized in that at least a part of the ion exchanger in various forms as described above placed in the deionization compartment and/or concentration compartment, preferably at least in the deionization compartment of the electrical deionization apparatus as described above in relation to the first and second aspects of the present invention has a crosslinked graft chain having an ion exchange group on the backbone of an organic polymer substrate. Said ion exchanger is preferably placed at least in the deionization compartment.

Such a crosslinked graft chain can be formed by graft-polymerizing a graft monomer as explained above in the presence of a crosslinker, for example. Crosslinkers that can be used for this purpose include glycerol dimethacrylate (e.g. BLEMER GLM from NOF CORPORATION) for aqueous polymerization systems using water-soluble monomers such as GMA, SSS/AAc and VBTAC as graft monomers, and divinylbenzene for non-aqueous polymerization systems using water-insoluble monomers such as chloromethylstyrene and styrene. For example, an ion exchanger having a cation exchange group such as a sulfone group on a crosslinked graft chain can be obtained by graft polymerization using a mixed solution of sodium styrenesulfonate as a graft monomer and glycerol dimethacrylate as a crosslinker.

A crosslinked graft chain can also be formed by preliminarily forming a graft chain and then reacting it with a crosslinker. For example, a crosslinked graft chain can be formed by performing graft polymerization as described above and then irradiating the grafted substrate again or reacting it with a hydrophilic crosslinker such as glycerol dimethacrylate in the presence of an initiator.

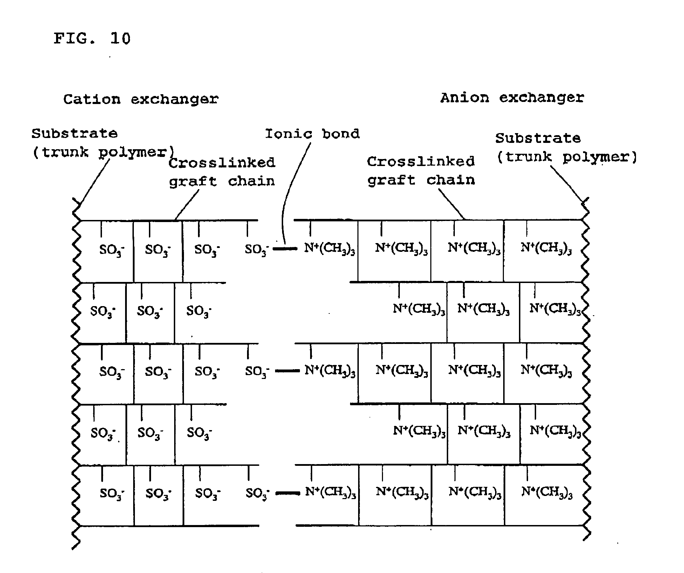

In the electrical deionization apparatus according to the third aspect of the present invention, an ion exchanger is placed in the deionization compartment and/or concentration compartment and at least a part of said ion exchanger has a crosslinked graft chain having an ion exchange group on the backbone of an organic polymer substrate as described above, thereby decreasing the degree of freedom of the graft chain to hinder ionic bond formation between cation exchange groups and anion exchange groups on the graft chain so that water splitting is not affected. If the graft chain does not have a crosslinked structure, ionic bonds are more easily formed between cation exchange groups and anion exchange groups because the graft chain has a high degree of freedom (mobility) so that the graft chain is readily deformed and the cation exchange groups and anion exchange groups come close to each other by the attraction of their charges. If the graft chain has a crosslinked structure, however, ionic bonds are formed only between cation exchange groups (sulfone group: $-SO_3^-$ in FIG. 10) and anion exchange groups (quaternary ammonium group: $-N^+(CH_3)_3$ in FIG. 10) in proximity to each other but no more ionic bonds are formed between ion exchange groups apart from each other as shown in FIG. 10 because the graft chain has a low degree of freedom. Moreover, the crosslinked graft chain forms a crosslinked matrix into which other graft chains cannot penetrate and therefore, ion exchange groups present in the matrix of the crosslinked graft chain form no ionic bond. This reduces the problem of ionic bond formation impeding water splitting under the interaction between cation exchange groups and anion exchange groups, and therefore reduces the problem of buildup of the operating voltage of the electrical deionization apparatus by prolonged operation.

When a cation-exchange fibrous material and an anion-exchange fibrous material are oppositely placed as ion exchangers on the cation exchange membrane side and the anion exchange membrane side, respectively and an ion-conducting spacer having a crosslinked graft chain having an ion exchange group on the backbone of an organic polymer substrate according to the third aspect of the present invention is used between these ion-exchange fibrous materials in the third aspect of the present invention, the influent flows more dispersively so that the increase of the operating voltage can be significantly reduced and at the same time the deionization efficiency is remarkably improved by its ion-trapping function, whereby carbonate components, silica components and organic carbon (TOC) components can be effectively removed.

Ion-conducting spacers used in this aspect can be in the form of diagonal nets or the like described above in relation to the first and second aspects the present invention. When a plurality of ion-conducting spacers are used in the third aspect of the present invention, an anion-conducting spacer having a crosslinked graft chain having an ion exchange group on the backbone of an organic polymer substrate according to the third aspect of the present invention is preferably placed on the side of the anion-exchange fibrous material, and a cation-conducting spacer having a crosslinked graft chain having an ion exchange group on the backbone of an organic polymer substrate according to the third aspect of the present invention is placed on the side of the cation-exchange fibrous material. However, the arrangement of ion-conducting spacers is not limited to the above, but depends on the influent water quality and a plurality of only anion-conducting spacers having a crosslinked graft chain having an ion exchange group on the backbone of an organic polymer substrate or only cation-conducting spacers having a crosslinked graft chain having an ion exchange group on the backbone of an organic polymer substrate may be placed between ion-exchange fibrous materials. Alternatively, an ion-conducting spacer having a conventional graft chain and/or an ion-conducting spacer having a crosslinked graft chain having an ion exchange group on the backbone of an organic polymer substrate may be placed between ion-exchange fibrous materials having a crosslinked graft chain having an ion exchange group on the backbone of an organic polymer substrate.

Referring to the attached drawings, the third aspect of the present invention is further explained in detail below. The following description illustrates a preferred embodiment of an electrical deionization apparatus according to the third aspect of the present invention without limiting the present invention thereto.

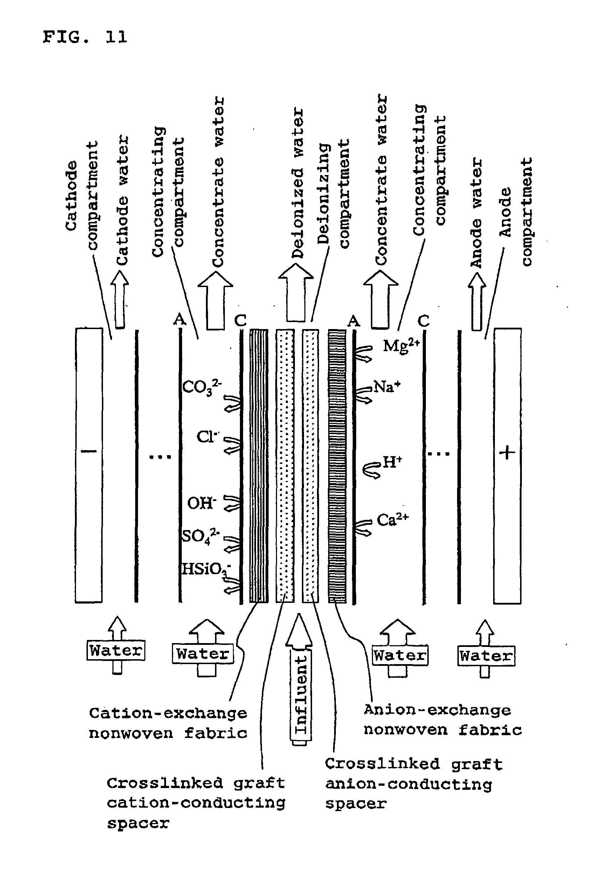

FIG. 11 is a schematic view of an electrical deionization apparatus according to a preferred embodiment of the third aspect of the present invention. The electrical deionization apparatus shown in FIG. 11 comprises anion exchange membranes A and cation exchange membranes C at least partially alternately arranged between an anode and a cathode to form a deionization compartment and a concentration compartment. At least in the deionization compartment, a cation-exchange nonwoven fabric consisting of a cation-exchange fibrous material and an anion-exchange nonwoven fabric consisting of an anion-exchange fibrous material are oppositely placed, and a cation-conducting spacer having a crosslinked graft structure is placed on the side of the cation-exchange nonwoven fabric and an anion-conducting spacer having a crosslinked graft structure is placed on the side of the anion-exchange nonwoven fabric, respectively, between these fibrous materials. In the embodiment shown in the figure, only a single cell (concentration compartment / deionization compartment / concentration compartment) is shown, but multiple deionization cells (combinations of concentration compartment / deionization compartment / concentration compartment) may be arranged in parallel between the electrodes by repeating the sequence of cation exchange membranes and anion exchange membranes, if desired. The sequence of ion exchange membranes may partially include a sequence of ion exchange membranes of the same type.

The anion-conducting spacer and cation-conducting spacer placed in the deionization compartment shown in FIG. 11 are ion exchangers having a crosslinked graft chain having an ion exchange group on the backbone of an organic polymer substrate.

Next, the operation of the electrical deionization apparatus according to an embodiment of the third aspect of the present invention shown in FIG. 11 is explained. When a DC voltage is applied between the cathode and the anode and an influent is passed, cations such as $Ca^{2+}$, $Mg^{2+}$ and $Na^+$ in the influent are ion-exchanged by the cation exchanger in the deionization compartment, transported from the cation exchanger through the cation exchange membrane into the concentration compartment under an electric field and discharged as a concentrate water. On the other hand, anions such as $Cl^-$ and $SO_4^{2-}$ in the influent are ion-exchanged by the anion exchanger in the deionization compartment, transported from the anion exchanger through the anion exchange membrane into the concentration compartment under an electric field and discharged as a concentrate water.

During then, water splits under the influence of an electric field generated by cation exchange groups ($SO_3^-$ in FIG. 2) and anion exchange groups (($CH_3)_3N^+$ in FIG. 2) in proximity to each other at the interface between the cation-conducting spacer and the anion-conducting spacer so that $H^+$ ions are attracted toward the cation exchanger and $OH^-$ ions are attracted toward the anion exchanger, as shown in FIG. 2(a). As the operation is prolonged, no more water splits because charges are neutralized by ionic bond formation between cation exchange groups and anion exchange groups in proximity to each other. In the third aspect of the present invention, however, water splitting continually occurs because these ion-conducting spacers have a crosslinked graft chain having an ion exchange group as shown in FIG. 10, which decreases the degree of freedom to hinder ionic bond formation between ion exchange groups apart from each other so that charges are maintained. This prevents the operating voltage from being increased by inhibition of water splitting after prolonged operation.

Although FIG. 11 shows an embodiment wherein an anion exchange spacer having a crosslinked graft structure is placed on the side of an anion-exchange nonwoven fabric and a cation exchange spacer having a crosslinked graft structure is placed on the side of a cation-exchange nonwoven fabric in a deionization compartment, only the anion exchange spacer can be placed between these ion-exchange nonwoven fabrics, for example.

The present invention is further explained in detail by way of specific examples below.

Preparation example 1: Preparation of an ion-conducting spacer having a quaternary ammonium group and a nonionic functional group as a plurality of different functional groups

A polyethylene diagonal net having a thickness of 1.2 mm and a pitch of 3 mm was used as a substrate for the ion-conducting spacer, and vinyl benzyl trimethyl ammonium chloride (VBTAC) having a quaternary ammonium group and N,N-dimethylacrylamide (DMAA) having a nonionic functional group were used as graft monomers having a functional group.

The polyethylene diagonal net was irradiated with γ-rays (150 kGy) with cooling on dry ice in a nitrogen atmosphere. This diagonal net irradiated with γ-rays was immersed in a mixed monomer solution of VBTAC and DMAA (VBTAC : DMAA : water = 40:40:20 (% by weight)) and reacted at 50°C for 3 hours to give a VBTAC and DMAA-grafted diagonal net. The resulting VBTAC and DMAA-grafted diagonal net was dried and measured for dry weight, and the grafting degree calculated by equation (1) below was 156%.

$$\text{Grafting degree} = (\text{Dry weight after graft polymerization}) / (\text{Dry weight before graft polymerization}) \times 100 \qquad (1)$$

The salt splitting capacity of the VBTAC and DMAA-grafted diagonal net was determined to be 198 meq/$m^2$.

Preparation example 2: Preparation of an ion-conducting spacer having a quaternary ammonium group and a tertiary amino group as a plurality of different functional groups

A polyethylene diagonal net having a thickness of 1.2 mm and a pitch of 3 mm was used as a substrate for the ion-conducting spacer.

The polyethylene diagonal net was irradiated with γ-rays (150 kGy) with cooling on dry ice in a nitrogen atmosphere. This diagonal net irradiated with γ-rays was immersed in chloromethylstyrene (70% m-isomer, 30% p-isomer, available from Seimi Chemical Co., Ltd. under trade name CMS-AM) preliminarily freed of polymerization inhibitors using alumina and reacted at 50°C for 5 hours to give a chloromethylstyrene-grafted diagonal net (grafting degree 90%). The resulting chloromethylstyrene-grafted diagonal net was functionalized with quaternary ammonium and tertiary amino groups in an aqueous mixed solution of trimethylamine and dimethylamine (trimethylamine : dimethylamine : water = 10:1:89 (% by weight)), and then regenerated in an aqueous sodium hydroxide solution to give an ion-conducting spacer having a quaternary ammonium group and a tertiary amino group. It had a salt splitting capacity of 155 meq/m$^2$ and a total exchange capacity of 158 meq/m$^2$.

Preparation example 3: Preparation of an ion-conducting spacer having a quaternary ammonium group and a tertiary amino group as a plurality of different functional groups

A polyethylene diagonal net having a thickness of 1.2 mm and a pitch of 3 mm was used as a substrate for the ion-conducting spacer.

The polyethylene diagonal net was irradiated with γ-rays (150 kGy) with cooling on dry ice in a nitrogen atmosphere. This diagonal net irradiated with γ-rays was immersed in chloromethylstyrene (70% m-isomer, 30% p-isomer, available from Seimi Chemical Co., Ltd. under trade name CMS-AM) preliminarily freed of polymerization inhibitors using alumina and reacted at 50°C for 5 hours to give a chloromethylstyrene-grafted diagonal net (grafting degree 90%). The resulting chloromethylstyrene-grafted diagonal net was functionalized with quaternary ammonium and tertiary amino groups in a 10 wt % aqueous triethylene diamine solution, and then regenerated'in an aqueous sodium hydroxide solution to give an ion-conducting spacer having a quaternary ammonium group and a tertiary amino group. It had a salt splitting capacity of 171 meq/m$^2$ and a total exchange capacity of 279 meq/m$^2$.

Preparation example 4: Preparation of an ion-conducting spacer having a carboxyl group and a sulfone group as a plurality of different functional groups

A polyethylene diagonal net having a thickness of 1.2 mm and a pitch of 3 mm was used as a substrate for the ion-conducting spacer.

The polyethylene diagonal net was irradiated with γ-rays (150 kGy) with cooling on dry ice in a nitrogen atmosphere. This diagonal net irradiated with γ-rays was immersed in a mixed monomer solution of sodium styrenesulfonate and acrylic acid (25 wt % sodium styrenesulfonate : 25 wt % acrylic acid) and reacted at 75°C for 3 hours to give a grafted diagonal net having a sulfone group and a carboxyl group (grafting degree 153%). It had a salt splitting capacity of 189 meq/m$^2$ and a total exchange capacity of 834 meq/m$^2$.

Preparation example 5: Preparation of a strongly basic anion-conducting spacer

A polyethylene diagonal net having a thickness of 1.2 mm and a pitch of 3 mm was used as a substrate for the ion-conducting spacer.

The polyethylene diagonal net was irradiated with γ-rays (150 kGy) with cooling on dry ice in a nitrogen atmosphere. This diagonal net irradiated with γ-rays was immersed in chloromethylstyrene (70% m-isomer, 30% p-isomer, available from Seimi Chemical Co., Ltd. under trade name CMS-AM) preliminarily freed of polymerization inhibitors using activated alumina and reacted at 50°C for 5 hours to give a chloromethylstyrene-grafted diagonal net (grafting degree 90%). This grafted diagonal net was functionalized with a quaternary ammonium group in a 10 wt % aqueous trimethylamine solution and regenerated in an aqueous sodium hydroxide solution to give a strongly basic anion-conducting spacer (salt splitting capacity: 267 meq/m$^2$).

Preparation example 6: Preparation of a strongly acidic cation-conducting spacer

A polyethylene diagonal net having a thickness of 1.2 mm and a pitch of 3 mm was used as a substrate for the ion-conducting spacer.

The polyethylene diagonal net was irradiated with γ-rays (150 kGy) with cooling on dry ice in a nitrogen atmosphere. This diagonal net irradiated with γ-rays was immersed in a styrene monomer (from Wako Pure Chemical Industries) and reacted at 30°C for 3 hours to give a styrene-grafted diagonal net (grafting degree 90%). This styrene-grafted diagonal net was immersed in a mixed solution of chlorosulfonic acid and 1,2-dichloroethane (chlorosulfonic acid : 1,2-dichloroethane = 25:75 (weight ratio) at 30°C for 1 hour to introduce a sulfone group into the benzene ring, and the diagonal net was washed with methanol and then hydrolyzed with an aqueous sodium hydroxide solution (5 wt %) and regenerated with hydrochloric acid to give a cation-conducting spacer (salt splitting capacity: 280 meq/m$^2$).

Preparation example 7: Preparation of a cation-exchange nonwoven fabric having a plurality of different functional groups

A heat-fusible nonwoven fabric having an areal density of 55 g/m$^2$ and a thickness of 0.35 mm made of a polyethylene (sheath) / polypropylene (core) composite fiber of about 17 μm in diameter was used as a substrate and irradiated with electron rays (150 kGy) in a nitrogen atmosphere.

The heat-fusible nonwoven fabric was irradiated with γ-rays (150 kGy) with cooling on dry ice in a nitrogen atmosphere. This diagonal net irradiated with γ-rays was immersed in a mixed monomer solution of sodium styrenesulfonate and acrylic acid (sodium styrenesulfonate : acrylic acid : water = 16:5.5:78.5 (% by weight)) and reacted at 50°C for 3 hours to give a grafted nonwoven fabric having a sulfone group and a carboxyl group (grafting degree 80%). It had a salt splitting capacity of 188 meq/m$^2$ and a total exchange capacity of 506 meq/m$^2$.

Preparation example 8: Preparation of an anion-exchange nonwoven fabric having a plurality of different functional groups

A heat-fusible nonwoven fabric having an areal density of 55 g/m$^2$ and a thickness of 0.35 mm made of a polyethylene (sheath) / polypropylene (core) composite fiber of about 17 μm in diameter was used as a substrate and irradiated with electron rays (150 kGy) in a nitrogen atmosphere.

Chloromethylstyrene (available from Seimi Chemical under trade name CMS-AM) was passed through a packed bed of activated alumina to remove polymerization inhibitors and then deoxygenated by nitrogen blowing. The irradiated nonwoven substrate was immersed in the deoxygenated chloromethylstyrene solution and reacted at 50°C for 6 hours. The nonwoven fabric was then removed from the chloromethylstyrene solution and immersed in toluene for 3 hours to remove homopolymers, whereby a strongly basic anion-exchange nonwoven fabric (grafting degree: 161%) was obtained. The resulting chloromethylstyrene-grafted nonwoven fabric was functionalized with quaternary ammonium and tertiary amino groups in an aqueous mixed solution of trimethylamine and dimethylamine (trimethylamine : dimethylamine : water = 10:1:89 (% by weight)), and then regenerated in an aqueous sodium hydroxide solution to give an ion-exchange nonwoven fabric having a quaternary ammonium group and a tertiary amino group. It had a salt splitting capacity of 279 meq/m$^2$ and a total exchange capacity of 286 meq/m$^2$.

Preparation example 9: Preparation of a strongly acidic cation-exchange nonwoven fabric having a single ion exchange group

A heat-fusible nonwoven fabric having an areal density of 55 g/m$^2$ and a thickness of 0.35 mm made of a polyethylene (sheath) / polypropylene (core) composite fiber of about 17 μm in diameter was used as a substrate and irradiated with electron rays (150 kGy) in a nitrogen atmosphere.

The heat-fusible nonwoven fabric irradiated with electron rays was immersed in a 10% glycidyl methacrylate solution in methanol and reacted at 45°C for 4 hours. The reacted nonwoven fabric was immersed in a dimethylformamide solution at 60°C for 5 hours to remove homopolymers. whereby a glycidyl methacrylate-grafted nonwoven fabric (grafting degree: 131%) was obtained. This grafted nonwoven fabric was immersed in a solution of sodium sulfite : isopropyl alcohol : water = 1:1:8 (weight ratio) and reacted at 80°C for 10 hours to give a strongly acidic cation-exchange nonwoven fabric (salt splitting capacity: 471 meq/m$^2$).

Preparation example 10: Preparation of a strongly basic anion-exchange nonwoven fabric having a single ion exchange group

A heat-fusible nonwoven fabric having an areal density of 55 g/m$^2$ and a thickness of 0.35 mm made of a polyethylene (sheath) / polypropylene (core) composite fiber of about 17 μm in diameter was used as a substrate and irradiated with electron rays (150 kGy) in a nitrogen atmosphere.

Chloromethylstyrene (available from Seimi Chemical under trade name CMS-AM) was passed through a packed bed of activated alumina to remove polymerization inhibitors and then deoxygenated by nitrogen blowing. The irradiated nonwoven substrate was immersed in the deoxygenated chloromethylstyrene solution and reacted at 50°C for 6 hours. The nonwoven fabric was then removed from the chloromethylstyrene solution and immersed in toluene for 3 hours to remove homopolymers, whereby a chloromethylstyrene-grafted nonwoven fabric (grafting degree: 161%) was obtained. The resulting chloromethylstyrene-grafted nonwoven fabric was functionalized with a quaternary ammonium group in an aqueous trimethylamine solution (10 wt %) and then regenerated in an aqueous sodium hydroxide solution to give a strongly basic anion-exchange nonwoven fabric having a quaternary ammonium group (salt splitting capacity: 350 meq/m$^2$).

Example 1

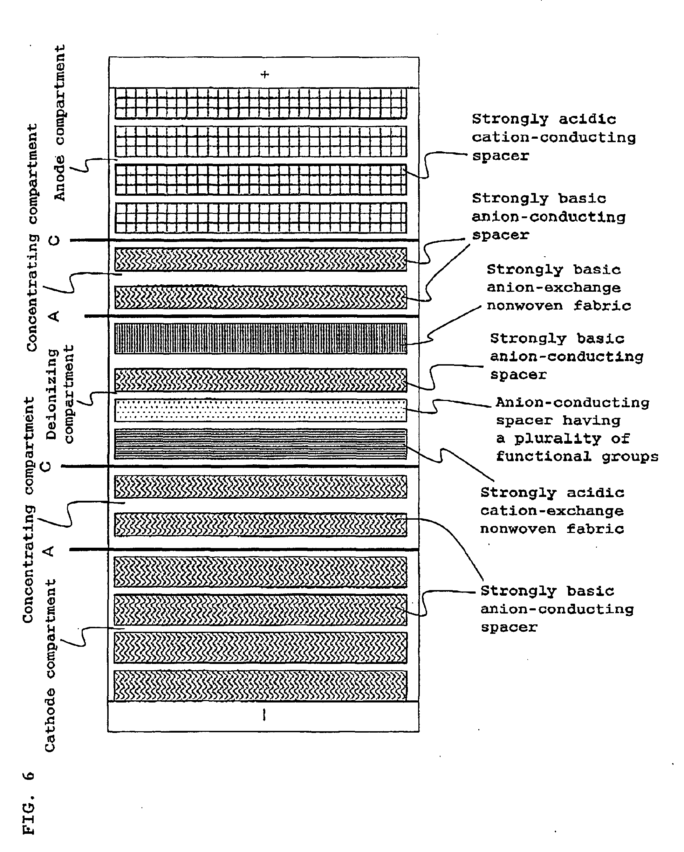

A small electrical deionization apparatus shown in FIG. 6 was constructed. Cation exchange membranes C (NEOSEPTA CM1 from Tokuyama Corp.) and anion exchange membranes A (NEOSEPTA AM1 from Tokuyama Corp.)

were alternately arranged between an anode and a cathode to form a concentration compartment, a deionization compartment and a concentration compartment between cation exchange membranes C and anion exchange membranes A; an anode compartment between one concentration compartment and the anode; and a cathode compartment between the other concentration compartment and the cathode. The anode compartment was packed with 4 pieces of the strongly acidic cation-conducting diagonal net (prepared in Preparation example 6), and the cathode compartment was packed with 4 pieces of the strongly basic anion-conducting diagonal net (prepared in Preparation example 5). Each concentration compartment was packed with 2 pieces of the strongly basic anion-conducting spacer having a single ion exchange group (prepared in Preparation example 5). The deionization compartment was packed with a piece of the strongly basic anion-exchange nonwoven fabric (prepared in Preparation example 10) on the side of anion exchange membrane A and a piece of the strongly acidic cation-exchange nonwoven fabric (prepared in Preparation example 9) on the side of cation exchange membrane C as well as a piece of the strongly basic anion-conducting spacer having a single ion exchange group (prepared in Preparation example 5) on the side of the strongly basic anion-exchange nonwoven fabric and a piece of the anion-conducting spacer having a plurality of different functional groups (prepared in Preparation example 1) on the side of the strongly acidic cation-exchange nonwoven fabric.

A DC current of 0.1 A was applied between both electrodes and 0.2 MΩcm RO water (reverse osmosis membrane-treated water: silica content 0.1-0.3 ppm, water temperature 14-20°C) was passed at a flow rate of 5 L/h to give ultrapure water of 18 MΩcm or more at the exit of the deionization compartment. The operating voltage after operation for 100 hours was 53 V.

Example 2

The same procedure as described in Example 1 was performed except that the deionization compartment was packed with a piece of the anion-conducting spacer having a plurality of different functional groups (prepared in Preparation example 1) on the side of the strongly basic anion-exchange nonwoven fabric and a piece of the cation-conducting spacer having a plurality of different functional groups (prepared in Preparation example 4) on the side of the strongly acidic cation-exchange nonwoven fabric. Ultrapure water of 17 MΩcm or more was obtained at the exit of the deionization compartment. The operating voltage after operation for 100 hours was 45 V.

Example 3

The same procedure as described in Example 1 was performed except that the deionization compartment was packed with a piece of the acidic cation-conducting spacer having a plurality of different functional groups (prepared in Preparation example 4) on the side of the strongly basic anion-exchange nonwoven fabric and a piece of the strongly acidic cation-conducting spacer having a single ion exchange group (prepared in Preparation example 6) on the side of the strongly acidic cation-exchange nonwoven fabric. Ultrapure water of 17 MΩcm or more was obtained at the exit of the deionization compartment and the operating voltage after operation for 100 hours was 48 V.

Comparative example 1

The same procedure as described in Example 1 was performed except that the deionization compartment was packed with a piece of the basic anion-exchange nonwoven fabric having a single functional group (prepared in Preparation example 10) on the side of anion exchange membrane A, a piece of the strongly acidic cation-exchange nonwoven fabric having a single functional group (prepared in Preparation example 9) on the side of cation exchange membrane C, and a piece of the strongly basic anion-conducting spacer having a single ion exchange group (prepared in Preparation example 5) between these nonwoven fabrics. Ultrapure water of 18 MΩcm or more was obtained at the exit of the deionization compartment. The operating voltage after operation for 100 hours was 78 V.

Example 4

The same procedure as described in Example 1 was performed except that the deionization compartment was packed with a piece of the basic anion-exchange nonwoven fabric having a plurality of functional groups (prepared in Preparation example 8) on the side of anion exchange membrane A and a piece of the strongly acidic cation-exchange nonwoven fabric (prepared in Preparation example 9) on the side of cation exchange membrane C and the ion-conducting spacers were removed. Ultrapure water of 18 MΩcm or more was obtained at the exit of the deionization compartment. The operating voltage after operation for 100 hours was 43 V.

Example 5

The same procedure as described in Example 1 was performed except that the deionization compartment was packed with a piece of the basic anion-exchange nonwoven fabric having a plurality of functional groups (prepared in Preparation example 8) on the side of anion exchange membrane A and a piece of the acidic cation-exchange nonwoven fabric having a plurality of functional groups (prepared in Preparation example 7) on the side of cation exchange membrane C and the ion-conducting spacers were removed. Ultrapure water of 18 MΩcm or more was obtained at the exit of the deionization compartment and the operating voltage after operation for 100 hours was 40 V.

Example 6

The same procedure as described in Example 1 was performed except that the deionization compartment was packed with a piece of the strongly basic anion-exchange nonwoven fabric having a single ion exchange group (prepared in Preparation example 10) on the side of anion exchange membrane A and a piece of the acidic cation-exchange nonwoven fabric having a plurality of functional groups (prepared in Preparation example 7) on the side of cation exchange membrane C and the ion-conducting spacers were removed. Ultrapure water of 18 MΩcm or more was obtained at the exit of the deionization compartment. The operating voltage after operation for 100 hours was 45 V.

Comparative example 2

The same procedure as described in Example 1 was performed except that the deionization compartment was packed with a piece of the strongly basic anion-exchange nonwoven fabric having a single ion exchange group (prepared in Preparation example 10) on the side of anion exchange membrane A and a piece of the strongly acidic cation-exchange nonwoven fabric having a single ion exchange group (prepared in Preparation example 9) on the side of cation exchange membrane C and the ion-conducting spacers were removed. Ultrapure water of 18 MΩcm or more was obtained at the exit of the deionization compartment. The operating voltage after operation for 100 hours was 90 V.

Preparation example 11: Preparation of a cation-conducting spacer having a two-stage graft structure

A polyethylene diagonal net having a thickness of 1.2 mm and a pitch of 3 mm was used as a substrate for the ion-conducting spacer. The polyethylene diagonal net was irradiated with γ-rays (150 kGy) with cooling on dry ice in a nitrogen atmosphere. This diagonal net irradiated with γ-rays was immersed in a styrene monomer (from Wako Pure Chemical Industries) and reacted at 30°C for 3 hours to give a styrene-grafted diagonal net (grafting degree: 90%). This styrene-grafted diagonal net was immersed in a mixed solution of chlorosulfonic acid / 1,2-dichloroethane (weight ratio 25:75) and reacted at 30°C for 1 hour to introduce a sulfone group into the benzene ring, and the diagonal net was washed with methanol and then hydrolyzed with an aqueous sodium hydroxide solution (5 wt %) to give a sulfonic acid-type grafted diagonal net. Then, this grafted diagonal net was irradiated with γ-rays (150 kGy) again in a nitrogen atmosphere. This diagonal net irradiated with γ-rays was immersed in a 10% aqueous methacrylic acid solution and reacted at 50°C for 3 hours to form a second graft chain having a carboxyl group on the first graft chain. The grafting degree of the second stage graft polymerization reaction was calculated to be 15%. The salt splitting capacity of the resulting two-stage graft cation-conducting spacer was determined to be 240 meq/m$^2$.

Preparation example 12: Preparation of an anion-conducting spacer having a two-stage graft structure

A polyethylene diagonal net having a thickness of 1.2 mm and a pitch of 3 mm was used as a substrate for the ion-conducting spacer. The polyethylene diagonal net was irradiated with γ-rays (150 kGy) with cooling on dry ice in a nitrogen atmosphere. The irradiated diagonal net was immersed in a monomer solution of chloromethylstyrene (70% m-isomer, 30% p-isomer, available from Seimi Chemical Co., Ltd. under trade name CMS-AM) preliminarily freed of polymerization inhibitors using alumina and reacted at 50°C for 5 hours to give a chloromethylstyrene-grafted diagonal net (grafting degree 90%). The resulting chloromethylstyrene-grafted diagonal net was irradiated with γ-rays (150 kGy) again in a nitrogen atmosphere and immersed in a vinyl acetate monomer and reacted at 50°C for 5 hours to form a vinyl acetate graft chain on the first graft chain. This diagonal net was functionalized with a quaternary ammonium group in an aqueous trimethylamine solution and then saponified and regenerated at 50°C for 5 hours in an aqueous sodium hydroxide solution to form a second graft chain having a hydroxyl group on the first graft chain having a quaternary ammonium group. The grafting degree of the second stage graft polymerization reaction was calculated to be 15%. The salt splitting capacity of the resulting two-stage graft anion-conducting spacer was determined to be 255 meq/m$^2$.

Example 7

An electrical deionization apparatus having the structure shown in FIG. 9 (single deionization cell) was constructed. Cation exchange membranes C (NEOSEPTA CM1 from Tokuyama Corp.) and anion exchange membranes A (NEOSEPTA AM1 from Tokuyama Corp.) were alternately arranged between an anode and a cathode to form a concentration compartment, a deionization compartment and a concentration compartment between cation exchange membranes C and anion exchange membranes A; an anode compartment between one concentration compartment and the anode: and a cathode compartment between the other concentration compartment and the cathode. The anode compartment was packed with 4 pieces of the strongly acidic cation-conducting spacer (prepared in Preparation example 6), and the cathode compartment was packed with 4 pieces of the strongly basic anion-conducting spacer (prepared in Preparation example 5). Each concentration compartment was packed with 2 pieces of the strongly basic anion-conducting spacer (prepared in Preparation example 5). The deionization compartment was packed with a piece of the strongly basic anion-exchange nonwoven fabric (prepared in Preparation example 10) on the side of anion exchange membrane A and a piece of the strongly acidic cation-exchange nonwoven fabric (prepared in Preparation example 9) on the side of cation exchange membrane C as well as a piece of the anion-conducting spacer having a two-stage graft structure (prepared in Preparation example 12) on the side of the strongly basic anion-exchange nonwoven fabric and a piece of the cation-conducting spacer having a two-stage graft structure (prepared in Preparation example 11) on the side of the strongly acidic cation-exchange nonwoven fabric.

A DC current of 0.1 A was applied between both electrodes and 0.2 MΩcm RO water (reverse osmosis membrane-treated water: silica content 0.1-0.3 ppm, water temperature 14-20°C) was passed at a flow rate of 5 L/h to give ultrapure water of 18 MΩcm or more at the exit of the deionization compartment. The operating voltage after operation for 100 hours was 53 V.

Comparative example 3

The same procedure as described in Example 7 was performed except that the deionization compartment was packed with a piece of the anion-exchange nonwoven fabric prepared in Preparation example 10 on the side of anion exchange membrane A and a piece of the cation-exchange nonwoven fabric prepared in Preparation example 9 on the side of cation exchange membrane C as well as a piece of the anion-conducting spacer prepared in Preparation example 5 on the side of the anion-exchange nonwoven fabric and a piece of the cation-conducting spacer prepared in Preparation example 6 on the side of the cation-exchange nonwoven fabric between these nonwoven fabrics. Ultrapure water of 18 MΩcm or more was obtained at the exit of the deionization compartment. The operating voltage after operation for 100 hours was 78 V.

Preparation example 13: Preparation of a cation-conducting spacer having a crosslinked graft structure

A polyethylene diagonal net having a thickness of 1.2 mm and a pitch of 3 mm was used as a substrate for the ion-conducting spacer. The polyethylene diagonal net was irradiated with γ-rays (150 kGy) with cooling on dry ice in a nitrogen atmosphere. This diagonal net irradiated with γ-rays was immersed in a mixed solution of sodium styrenesulfonate / acrylic acid / glycerol dimethacrylate / water (weight ratio 20% : 20% : 5% : 55%) and reacted at 75°C for 3 hours to give a cation-conducting diagonal net spacer having a crosslinked graft structure. This diagonal net was dried and measured for dry weight, and the grafting degree calculated was 185%. The salt splitting capacity of the resulting cation-conducting spacer was determined to be 195 meq/m$^2$.

Preparation example 14: Preparation of an anion-conducting spacer having a crosslinked graft structure

A polyethylene diagonal net having a thickness of 1.2 mm and a pitch of 3 mm was used as a substrate for the ion-conducting spacer. The polyethylene diagonal net was irradiated with γ-rays (150 kGy) with cooling on dry ice in a nitrogen atmosphere. The irradiated diagonal net was immersed in a mixed solution of chloromethylstyrene (70% m-isomer, 30% p-isomer, available from Seimi Chemical Co., Ltd. under trade name CMS-AM) preliminarily freed of polymerization inhibitors using alumina and divinylbenzene at a weight ratio of 80% : 20% and reacted at 50°C for 5 hours to give a chloromethylstyrene-grafted crosslinked diagonal net (grafting degree 120%). The resulting chloromethylstyrene-grafted crosslinked diagonal net was functionalized with a quaternary ammonium group in a 10 wt % aqueous trimethylamine solution at 50°C and then regenerated in an aqueous sodium hydroxide solution to give an anion-conducting spacer having a crosslinked graft structure. It had a salt splitting capacity of 215 meq/m$^2$.

Example 8

An electrical deionization apparatus having the structure shown in FIG. 11 (single deionization cell) was constructed. Cation exchange membranes C (NEOSEPTA CM1 from Tokuyama Corp.) and anion exchange membranes A (NEOSEPTA AM1 from Tokuyama Corp.) were alternately arranged between an anode and a cathode to form a concentration compartment, a deionization compartment and a concentration compartment between cation exchange membranes C and anion exchange membranes A; an anode compartment between one concentration compartment and the anode; and a cathode compartment between the other concentration compartment and the cathode. The anode compartment was packed with 4 pieces of the strongly acidic cation-conducting spacer (prepared in Preparation example 6), and the cathode compartment was packed with 4 pieces of the strongly basic anion-conducting spacer ((prepared in Preparation example 5). Each concentration compartment was packed with 2 pieces of the strongly basic anion-conducting spacer (prepared in Preparation example 5). The deionization compartment was packed with a piece of the strongly basic anion-exchange nonwoven fabric (prepared in Preparation example 10) on the side of exchange membrane A and a piece of the strongly acidic cation-exchange nonwoven fabric (prepared in Preparation example 9) on the side of cation exchange membrane C as well as a piece of the anion-conducting spacer having a crosslinked graft structure (prepared in Preparation example 14) on the side of the strongly basic anion-exchange nonwoven fabric and a piece of the cation-conducting spacer having a crosslinked graft structure (prepared in Preparation example 13) on the side of the strongly acidic cation-exchange nonwoven fabric.

A DC current of 0.1 A was applied between both electrodes and 0.2 MΩcm RO water (reverse osmosis membrane-treated water: silica content 0.1-0.3 ppm, water temperature 14-20°C) was passed at a flow rate of 5 L/h to give ultrapure water of 18 MΩcm or more at the exit of the deionization compartment. The operating voltage after operation for 100 hours was 53.4 V.

Comparative example 4

The same procedure as described in Example 8 was performed except that the deionization compartment was packed with a piece of the anion-exchange nonwoven fabric prepared in Preparation example 10 on the side of anion exchange membrane A and a piece of the cation-exchange nonwoven fabric prepared in Preparation example 9 on the side of cation exchange membrane C as well as a piece of the anion-conducting spacer prepared in Preparation example 5 on the side of the anion-exchange nonwoven fabric and a piece of the cation-conducting spacer prepared in Preparation example 6 on the side of the cation-exchange nonwoven fabric between these nonwoven fabrics. Ultrapure water of 18 MΩcm or more was obtained at the exit of the deionization compartment. The operating voltage after operation for 100 hours was 78 V.

INDUSTRIAL APPLICABILITY

Various aspects of the present invention provide ion exchangers for an electrical deionization apparatus and ion-conducting spacers for an electrical deionization apparatus, by which water splitting can be continued even after prolonged operation, as well as an electrical deionization apparatus that can be operated at low voltages by preventing voltage buildup in the electrical deionization apparatus.

With electrical deionization apparatuses according to various aspects of the present invention, the effluent water quality and electric power consumption are remarkably improved and the increase in the operating voltage of the deionization apparatus is prevented without using any chemicals for regenerating ion exchangers, whereby ultrapure water can be prepared using only electric energy, in contrast with conventional deionization apparatuses.

**Claims**

1. An ion exchanger for an electrical deionization apparatus which is to be placed in at least one of deionization compartment and/or concentration compartment in the electrical deionization apparatus comprising cation exchange membranes and anion exchange membranes at least partially alternately arranged between an anode and a cathode to form the deionization compartment and the concentration compartment and further comprising an ion exchanger in said deionization compartment and/or concentration compartment, the ion exchanger having at least partially a plurality of different functional groups.

2. The ion exchanger for an electrical deionization apparatus of claim 1 which has a combination of at least one strongly acidic ion exchange group and non-strongly acidic functional group, and/or a combination of at least one strongly basic ion exchange group and non-strongly basic functional group.

3. The ion exchanger for an electrical deionization apparatus of claim 1 or 2 which has a combination of at least one strongly acidic ion exchange group consisting of a sulfone group or at least one strongly basic ion exchange group consisting of a quaternary ammonium salt group and at least one non-strongly acidic or non-strongly basic functional group selected from phosphate, carboxyl, nonionic hydrophilic and primary to tertiary amino groups.

4. The ion exchanger for an electrical deionization apparatus of any one of claims 1 to 3 which has a plurality of different functional groups affixed by radiation-induced graft polymerization.

5. The ion exchanger for an electrical deionization apparatus of claim 4 which is an ion-exchange nonwoven fabric having a plurality of different functional groups affixed to a fibrous substrate by radiation-induced graft polymerization.

6. The ion exchanger for an electrical deionization apparatus of claim 4 which is an ion-conducting spacer having a plurality of different functional groups affixed to a porous substrate by radiation-induced graft polymerization.

7. An electrical deionization apparatus comprising cation exchange membranes and anion exchange membranes at least partially alternately arranged between an anode and a cathode to form deionization compartment and concentration compartment and further comprising an ion exchanger in said deionization compartment and/or concentration compartment, at least a part of said ion exchanger being formed of the ion exchanger of any one of claims 1 to 6.

8. The electrical deionization apparatus of claim 7 wherein at least a part of the ion exchanger placed in said deionization compartment and/or concentration compartment is formed of a strongly acidic cation exchanger or a strongly basic anion exchanger.

9. The electrical deionization apparatus of claim 7 or 8 wherein a graft chain has been introduced onto the backbone of the substrate by radiation-induced graft polymerization.

10. An ion exchanger for an electrical deionization apparatus which is to be placed in at least one of deionization compartment and/or concentration compartment in the electrical deionization apparatus comprising cation exchange membranes and anion exchange membranes at least partially alternately arranged between an anode and a cathode to form the deionization compartment and the concentration compartment and further comprising an ion exchanger in said deionization compartment and/or concentration compartment, the ion exchanger having a graft chain having an ion exchange group on the backbone of an organic polymer substrate and further having a second graft chain on said graft chain.

11. The ion exchanger for an electrical deionization apparatus of claim 10 wherein the graft chain has been introduced onto the backbone of the substrate by radiation-induced graft polymerization.

12. An electrical deionization apparatus comprising cation exchange membranes and anion exchange membranes at least partially alternately arranged between an anode and a cathode to form deionization compartment and concentration compartment and further comprising an ion exchanger in said deionization compartment and/or concentration compartment, at least a part of said ion exchanger having a graft chain having an ion exchange group on the backbone of an organic polymer substrate and further having a second graft chain on said graft chain.

13. The electrical deionization apparatus of claim 12 wherein a cation-exchange fibrous material and an anion-exchange fibrous material are oppositely placed on the cation exchange membrane side and the anion exchange membrane side, respectively in said deionization compartment and/or concentration compartment and an ion-conducting spacer having an ion exchange group is inserted between said fibrous materials, and at least one of said cation-exchange fibrous material, anion-exchange fibrous material or ion-conducting spacer is an ion exchanger having a graft chain having an ion exchange group on the backbone of an organic polymer substrate and further having a second graft chain on said graft chain.

14. The electrical deionization apparatus of claim 12 or 13 wherein the graft chain has been introduced onto the backbone of the substrate by radiation-induced graft polymerization.

15. An ion exchanger for an electrical deionization apparatus which is to be placed in at least one of deionization compartment and/or concentration compartment in the electrical deionization apparatus comprising cation exchange membranes and anion exchange membranes at least partially alternately arranged between an anode and a cathode to form the deionization compartment and the concentration compartment and further comprising an ion exchanger in said deionization compartment and/or concentration compartment, the ion exchanger having a crosslinked graft chain having an ion exchange group on the backbone of an organic polymer substrate.

16. The ion exchanger for an electrical deionization apparatus of claim 15 wherein the graft chain has been introduced onto the backbone of the substrate by radiation-induced graft polymerization.

17. An electrical deionization apparatus comprising cation exchange membranes and anion exchange membranes at least partially alternately arranged between an anode and a cathode to form deionization compartment and concentration compartment and further comprising an ion exchanger in said deionization compartment and/or concentration compartment, at least a part of said ion exchanger having a crosslinked graft chain having an ion exchange group on the backbone of an organic polymer substrate.

18. The electrical deionization apparatus of claim 17 **characterized in that** a cation-exchange fibrous material and an anion-exchange fibrous material are oppositely placed on the cation exchange membrane side and the anion exchange membrane side, respectively in said deionization compartment and/or concentration compartment and an ion-conducting spacer having an ion exchange group is inserted between said fibrous materials, and at least one of said cation-exchange fibrous material, anion-exchange fibrous material or ion-conducting spacer is an ion exchanger having a crosslinked graft chain having an ion exchange group on the backbone of an organic polymer substrate.

19. The electrical deionization apparatus of claim 17 or 18 wherein the graft chain has been introduced onto the backbone of the substrate by radiation-induced graft polymerization.

FIG. 1

FIG. 2(a)

Water splitting

Cation exchanger

Anion exchanger

Graft chain

Graft
chain

$-SO_3^-$ ← $H^+$ + $OH^-$ → $(CH_3)_3N^+$

Substrate
(trunk
polymer)

$-SO_3^-$

$(CH_3)_3N^+$

$H_2O$

$H_2O$

$-SO_3^-$

$(CH_3)_3N^+$

Substrate
(trunk
polymer)

$H^+$ + $OH^-$ → $(CH_3)_3N^+$

FIG. 2(b)

After prolonged operation

Cation exchanger

Anion exchanger

Graft
chain

$SO_3^-$ —— Ionic bond —— $(CH_3)_3N^+$

Graft
chain

$SO_3^-$ —— Ionic bond —— $(CH_3)_3N^+$

Substrate
(trunk
polymer)

$SO_3^-$ —— Ionic bond —— $(CH_3)_3N^+$

Substrate
(trunk
polymer)

FIG. 3

FIG. 4(a)

Water splitting

FIG. 4(b)

After prolonged operation

FIG. 5

FIG. 6

Cathode compartment

Concentrating compartment

A    C    Deionizing
compartment

Concentrating compartment

A    C    Anode compartment

−

+

Strongly basic
anion-conducting
spacer

Strongly acidic
cation-exchange
nonwoven fabric

Anion-conducting
spacer having
a plurality of
functional groups

Strongly basic
anion-conducting
spacer

Strongly basic
anion-exchange
nonwoven fabric

Strongly basic
anion-conducting
spacer

Strongly acidic
cation-conducting
spacer

FIG. 7

Substrate (trunk polymer)(PE)

Graft polymerization (first stage): CMS

Cl — First-stage
graft chain

Cl —

Cl — Substrate
(trunk
polymer)

Graft polymerization
(second stage):
Vinyl acetate

Quaternary ammonium-functionalization
(trimethylamine)/saponification

Second-stage
graft chain

$(CH_3)_3N^+$— First-stage
graft chain

OH     OH     OH

$(CH_3)_3N^+$—

OH     OH     OH

$(CH_3)_3N^+$— Substrate
(trunk
polymer)

OH     OH     OH

29

FIG. 8

FIG. 9

FIG. 10

Cation exchanger

Anion exchanger

Substrate (trunk polymer)

Ionic bond

Crosslinked graft chain

Crosslinked graft chain

Substrate (trunk polymer)

FIG. 11

Cathode compartment

Cathode water

Concentrating compartment

Concentrate water

Deionized water

Deionizing compartment

Concentrate water

Concentrating compartment

Anode water

Anode compartment

A    C    A    C

$-$   ...   $+$

$CO_3^{2-}$

$Cl^-$

$OH^-$

$SO_4^{2-}$

$HSiO_3^-$

$Mg^{2+}$

$Na^+$

$H^+$

$Ca^{2+}$

Water   Water   Influent   Water   Water

Cation-exchange nonwoven fabric

Anion-exchange nonwoven fabric

Crosslinked graft cation-conducting spacer

Crosslinked graft anion-conducting spacer

## INTERNATIONAL SEARCH REPORT

| International application No. |
| --- |
| PCT/JP02/13856 |

**A. CLASSIFICATION OF SUBJECT MATTER**
Int.Cl$^7$ B01J47/12, C02F1/46, C08J5/20

According to International Patent Classification (IPC) or to both national classification and IPC

**B. FIELDS SEARCHED**

Minimum documentation searched (classification system followed by classification symbols)
Int.Cl$^7$ B01J39/00-49/02, B01D61/48, C02F1/46-1/48

Documentation searched other than minimum documentation to the extent that such documents are included in the fields searched

| | | | |
| --- | --- | --- | --- |
| Jitsuyo Shinan Koho | 1926-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
WPIL

**C. DOCUMENTS CONSIDERED TO BE RELEVANT**

| Category* | Citation of document, with indication, where appropriate, of the relevant passages | Relevant to claim No. |
| --- | --- | --- |
| X | US 5308467 A (Ebara Corp.), 03 May, 1994 (03.05.94), Claims; column 3, line 41 to column 4, line 34; column 6, lines 22 to 48 & JP 05-064726 A & EP 503651 A1 | 1,4-9 |
| Y | Same as the above | 2,3 |
| A | Same as the above | 10-14,16,19 |
| X | JP 2001-113279 A (Kurita Water Industries Ltd.), 24 April, 2001 (24.04.01), Par. Nos. [0005], [0006]; Figs. 1 to 3 (Family: none) | 1,4,5,7-9 |

☒ Further documents are listed in the continuation of Box C.   ☐ See patent family annex.

| | |
| --- | --- |
| *    Special categories of cited documents: <br> "A"  document defining the general state of the art which is not considered to be of particular relevance <br> "E"  earlier document but published on or after the international filing date <br> "L"  document which may throw doubts on priority claim(s) or which is cited to establish the publication date of another citation or other special reason (as specified) <br> "O"  document referring to an oral disclosure, use, exhibition or other means <br> "P"  document published prior to the international filing date but later than the priority date claimed | "T"  later document published after the international filing date or priority date and not in conflict with the application but cited to understand the principle or theory underlying the invention <br> "X"  document of particular relevance; the claimed invention cannot be considered novel or cannot be considered to involve an inventive step when the document is taken alone <br> "Y"  document of particular relevance; the claimed invention cannot be considered to involve an inventive step when the document is combined with one or more other such documents, such combination being obvious to a person skilled in the art <br> "&"  document member of the same patent family |
| Date of the actual completion of the international search <br> 12 March, 2003 (12.03.03) | Date of mailing of the international search report <br> 25 March, 2003 (25.03.03) |
| Name and mailing address of the ISA/ <br> Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP02/13856

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2001-353490 A  (Asahi Kasei Corp.),<br>25 December, 2001 (25.12.01),<br>Claims; Par. No. [0013]<br>(Family: none) | 1-3,15,17,<br>18 |
| Y | JP 02-277555 A  (Tosoh Corp.),<br>14 November, 1990 (14.11.90),<br>Claims<br>(Family: none) | 1-3 |
| Y | JP 2001-002738 A  (Mitsubishi Chemical Corp.),<br>09 January, 2001 (09.01.01),<br>Claims; Par. Nos. [0014], [0025]<br>(Family: none) | 15,17,18 |

Form PCT/ISA/210 (continuation of second sheet) (July 1998)

EP 1 462 172 A1

## INTERNATIONAL SEARCH REPORT

International application No.

PCT/JP02/13856

| Box I  Observations where certain claims were found unsearchable (Continuation of item 2 of first sheet) |
| --- |
| This international search report has not been established in respect of certain claims under Article 17(2)(a) for the following reasons: |

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box II  Observations where unity of invention is lacking (Continuation of item 3 of first sheet) |
| --- |

This International Searching Authority found multiple inventions in this international application, as follows:

```
    Claims 1 to 9 relate to an ion exchanger for an electric demineralization
apparatus which has a plurality of different functional groups and an electric
demineralization apparatus equipped with the ion exchanger.
    Claims 10 to 14 relate to an ion exchanger for an electric demineralization
apparatus which has an organic polymer base material as a main chain and,
grafted thereon, a first graft polymer side chain having an ion exchange group
and further has a second graft polymer side chain introduced on the first
graft polymer side chain and an electric demineralization apparatus equipped
with the ion exchanger.
(continued to extra sheet)
```

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐  The additional search fees were accompanied by the applicant's protest.

☐  No protest accompanied the payment of additional search fees.

Form PCT/ISA/210 (continuation of first sheet (1)) (July 1998)

36

| INTERNATIONAL SEARCH REPORT | International application No. |
|---|---|
| | PCT/JP02/13856 |

Continuation of Box No.II of continuation of first sheet(1)

Claims 15 to 19 relate to an ion exchanger for an electric demineralization apparatus which has an organic polymer base material as a main chain and, grafted thereon, a graft polymer side chain having a crosslinked structure, and further has an ion exchange group introduced on the graft polymer side chain having a crosslinked structure and an electric demineralization apparatus equipped with the ion exchanger.

Form PCT/ISA/210 (extra sheet) (July 1998)